# EUROPÄISCHE PATENTSCHRIFT

(11) **EP 3 932 020 B1**
(45) Veröffentlichungstag und Bekanntmachung des Hinweises auf die Patenterteilung: **31.08.2022**
(21) Anmeldenummer: 20712546.9
(22) Anmeldetag: 18.03.2020
(51) Int. Cl.: H04L 12/46, H04L 12/40, H04L 45/00

(54) **VERFAHREN ZUM ROUTEN VON TELEGRAMMEN IN EINEM AUTOMATISIERUNGSNETZWERK, DATENSTRUKTUR, AUTOMATISIERUNGSNETZWERK UND NETZWERKVERTEILER**
METHOD FOR ROUTING TELEGRAMS IN AN AUTOMATION NETWORK, DATA STRUCTURE, AUTOMATION NETWORK AND NETWORK DISTRIBUTER
PROCÉDÉ DE ROUTAGE DE TÉLÉGRAMMES DANS UN RÉSEAU D'AUTOMATISATION, STRUCTURE DE DONNÉES, RÉSEAU D'AUTOMATISATION ET RÉPARTITEUR DE RÉSEAU

(30) Priorität: 28.05.2019 DE 102019114309
(43) Veröffentlichungstag der Anmeldung: 05.01.2022
(73) Patentinhaber: Beckhoff Automation GmbH, 33415 Verl (DE)
(72) Erfinder: JANSSEN, Dirk, 33415 Verl (DE); ESSLER, Florian, 90427 Nürnberg (DE); BECKMANN, Guido, 33415 Verl (DE); BECKHOFF, Hans, 33415 Verl (DE); BÜTTNER, Holger, 12157 Berlin (DE); ROSTAN, Martin, 90482 Nürnberg (DE); RETTIG, Thomas, 33378 Rheda-Wiedenbrück (DE)
(74) Vertreter: Patentanwaltskanzlei WILHELM & BECK
(86) Internationale Anmeldenummer: PCT/EP2020/057438
(87) Internationale Veröffentlichungsnummer: WO 2020/239285

(56) Entgegenhaltungen:
- US-A1- 2010 008 372
- US-A1- 2015 117 177
- JAHANZAIB IMTIAZ ET AL: "A layer-2 multicast forwarding policy for a generic Real-time Ethernet system", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 53-60, XP031732752, ISBN: 978-1-4244-5460-0
- JASPERNEITE J ET AL: "A Proposal for a Generic Real-Time Ethernet System", IEEE TRANSACTIONS ON INDUSTRIAL INFORMATICS, IEEE SERVICE CENTER, NEW YORK, NY, US, Bd. 5, Nr. 2, 1. Mai 2009 (2009-05-01), Seiten 75-85, XP011334256, ISSN: 1551-3203, DOI: 10.1109/TII.2009.2017259
- Anonymous: "EtherType - Wikipedia", , 27. Mai 2019 (2019-05-27), XP055705896, Gefunden im Internet: URL:https://en.wikipedia.org/w/index.php?t itle=EtherType&oldid=899106710 [gefunden am 2020-06-17]

## Beschreibung

Verfahren zum Routen von Telegrammen in einem Automatisierungsnetzwerk, Datenstruktur, Automatisierungsnetzwerk und Netzwerkverteiler Die Erfindung betrifft ein Verfahren zum Routen von Telegrammen in einem Automatisierungsnetzwerk. Die Erfindung betrifft weiterhin eine Datenstruktur zur Verwendung in dem Verfahren. Darüber hinaus betrifft die Erfindung ein Automatisierungsnetzwerk, das Netzwerkteilnehmer umfasst, die über ein Datenleitungsnetz miteinander verbunden sind. Überdies betrifft die Erfindung einen Netzwerkverteiler in dem Automatisierungsnetzwerk, der ausgelegt ist, das Verfahren zum Routen von Telegrammen auszuführen.

Diese Patentanmeldung beansprucht die Priorität der deutschen Patentanmeldung DE 10 2019 114 309.8, eingereicht am 28.05.2019 mit dem Titel VERFAHREN ZUM ROUTEN VON TELEGRAMMEN IN EINEM AUTOMATISIERUNGSNETZWERK, DATENSTRUKTUR, AUTOMATISIERUNGSNETZWERK UND NETZWERKVERTEILER.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, dass sich die Netzwerkteilnehmer dieselbe Datenleitung für die Datenübertragung teilen können. Zu diesem Zweck gibt es festgelegte Hierarchien und normierte Datenübertragungsprotokolle.

Meist arbeiten die Feldbussysteme im sogenannten "Master-Slave-Betrieb". Das heißt wenigstens ein Netzwerkteilnehmer ist als Masterteilnehmer ausgebildet und übernimmt die Steuerung der Prozesse, während die übrigen Netzwerkteilnehmer als Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und legen ihre Eingangsdaten in das Telegramm und senden das Telegramm an den Masterteilnehmer zurück.

In der Regel werden in Automatisierungsnetzwerken Netzwerkverteiler, sogenannte "Switche" eingesetzt, um die einzelnen Datenleitungen mit den angeschlossenen Netzwerkteilnehmern miteinander zu verbinden und dafür Sorge zu tragen, dass die Daten bzw. Telegramme über die an den einzelnen Ein-/Ausgangs-Ports der Netzwerkverteiler über das Datenleitungsnetz angeschlossenen Netzwerkteilnehmer an ihr Ziel gelangen.

Bei einem Automatisierungsnetzwerk, bei dem lediglich Telegramme mit zugrundeliegendem Ethernet Datenübertragungsprotokoll übertragen werden, erfolgt das Routing der Telegramme über die Netzwerkverteiler mittels Routingtabellen. Routing bezeichnet dabei das Festlegen von Übertragungswegen für die Übermittlung von Telegrammen zwischen den Netzwerkverteilern des Automatisierungsnetzwerks. Die genannten Routingtabellen haben für jede Kombination von sendendem Netzwerkteilnehmer und empfangendem Netzwerkteilnehmer einen Eintrag, der die Ziel-MAC-Adresse (MAC: Media Access Control) des empfangenden Netzwerkteilnehmers, die Absender-MAC-Adresse des sendenden Netzwerkteilnehmers sowie den Ein-/Ausgangs-Port des Netzwerkverteilers, der als Ausgangs-Port ausgebildet ist, über den das Telegramm ausgegeben wird, umfasst.

Erfolgt ein Austausch eines angeschlossenen Netzwerkteilnehmers, der das Ethernet Datenübertragungsprotokoll verarbeitet, so hat der getauschte Netzwerkteilnehmer in der Regel eine neue Absender-MAC-Adresse. Da diese neue Absender-MAC-Adresse noch nicht in der Routingtabelle des Netzwerkverteilers als Eintrag hinterlegt ist, muss der Netzwerkverteiler die Routingtabelle erst durch einen Lernprozess aktualisieren, also beim Empfang eines Telegramms von dem Netzwerkteilnehmer die Absender-MAC-Adresse in der Routingtabelle speichern, damit der getauschte Netzwerkteilnehmer an der Datenkommunikation Teil haben kann. Mit der Größe des Automatisierungsnetzwerks steigt der Speicherbedarf für die Routingtabelle nachteilig.

Darüber hinaus können die Netzwerkverteiler auch als sogenannte "managebare Switche" ausgebildet sein, das heißt neben den grundlegenden Funktionen können sie zusätzlich noch über Steuer- und Überwachungsfunktionen verfügen. Telegramme mit zugrundeliegendem Ethernet Datenübertragungsprotokoll (z.B. dem Datenübertragungsprotokoll PROFINET IRT) können hierbei beispielsweise über VLAN-IDs (Frame-IDs) im Automatisierungsnetzwerk geroutet werden, da die managebaren Switche in der Regel VLANs (VLAN: Virtual Local Area Network) unterstützen. VLANs sind logische Teilnetze innerhalb eines Netzwerkverteilers bzw. innerhalb des gesamten physischen Automatisierungsnetzwerks. Jedem VLAN bzw. Teilnetz kann dabei eine Identifikationsnummer, das heißt eine VLAN-ID zugewiesen sein.

Auch im Fall des Routings mit VLAN-IDs umfasst die Routingtabelle für jede Kombination von sendendem Netzwerkteilnehmer und empfangendem Netzwerkteilnehmer einen Eintrag mit der VLAN-ID, dem Ein-/Ausgangs-Port des Netzwerkverteilers, der als Eingangs-Port ausgebildet ist, sowie den Ein-/Ausgangs-Port des Netzwerkverteilers, der als Ausgangs-Port ausgebildet ist. Konfiguriert wird eine solche Routingtabelle mittels LLDP- sowie SNMP-Protokoll (LLDP: Link Layer Discovery Protocol, SNMP: Simple Network Management Protocol). Der Netzwerkverteiler kommuniziert über das LLDP-Protokoll mit jedem an den einzelnen Ein-/Ausgangs-Ports angeschlossenen Netzwerkteilnehmer, um festzustellen, wer angeschlossen ist. Diese Informationen werden in einer Datenbank gespeichert, auf die von einem Masterteilnehmer über das SNMP-Protokoll zugegriffen werden kann. Dies setzt voraus, dass jeder Netzwerkteilnehmer das LLDP- sowie das SNMP-Protokoll unterstützt sowie eine Datenbank aufweist.

Bei einem Austausch eines angeschlossenen Netzwerkteilnehmers, der das Ethernet Datenübertragungsprotokoll verarbeitet, muss für den getauschten Netzwerkteilnehmer, der ebenfalls das Ethernet Datenübertragungsprotokoll verarbeitet, erneut eingestellt werden, mit welchen Teilnetzen der getauschte Netzwerkteilnehmer über VLAN-IDs kommunizieren soll.

Hierbei wächst mit zunehmender Größe des Automatisierungsnetzwerks ebenfalls der Speicherbedarf für die Routingtabelle in nachteiliger Weise.

In einem Automatisierungsnetzwerk, in dem Telegramme mit zugrundeliegendem EtherCAT Datenübertragungsprotokoll übertragen werden, nachfolgend als EtherCAT Netzwerk bezeichnet, ist kein Routing im oben erläuterten Sinn an einen bestimmten Netzwerkteilnehmer erforderlich, wenn der Netzwerkteilnehmer als Slaveteilnehmer ausgebildet und in der Lage ist, das EtherCAT Datenübertragungsprotokoll zu verarbeiten. Denn in einem derart ausgebildeten Automatisierungsnetzwerk werden die Telegramme stets durch alle in einem EtherCAT Segment befindlichen Slaveteilnehmer geroutet und vom letzten Slaveteilnehmer des Segments an den Masterteilnehmer zurückgesandt. In dem EtherCAT Netzwerk können die Telegramme mit zugrundeliegendem EtherCAT Datenübertragungsprotokoll also von den Netzwerkverteilern an die EtherCAT Segmente geroutet werden. Meist wird ein solches EtherCAT Netzwerk nur mit einer Datenübertragungsrate betrieben. Zudem kann mit zunehmender Größe des EtherCAT Netzwerks mit einer Vielzahl an Slaveteilnehmern auch die Laufzeit des Telegramms durch das EtherCAT Netzwerk steigen.

Ein Verfahren zum Routen von Telegrammen in einem Automatisierungsnetzwerk nach dem Oberbegriff des neuen Anspruchs 1, sowie ein Automatisierungsnetzwerk nach dem Oberbegriff des neuen Anspruchs 7 sind aus der Schrift Jasperneite J. et. al: "A proposal for a Generic Real-Time Ethernet System", IEEE Transactions on Industrial Informatics, 2009-05-01, p. 75-78 bekannt. Weitere relevante Schriften für den kennzeichnenden Teil der Ansprüche bilden Jahanzaib Imtiaz et. al.: "A layer-2 multicast forwarding policy for a generic Real-time Ethernet system", Factory Communications Systems, 2010-05-18, p. 53-60, US 2010/008372 A1 sowie US 2015/117177 A1.

Eine Datenstruktur nach dem Oberbegriff des neuen Anspruchs 5 ist aus Jahanzaib Imtiaz et. al.: "A layer-2 multicast forwarding policy for a generic Real-time Ethernet system", Factory Communications Systems, 2010-05-18, p. 53-60 bekannt. Weitere relevante Schriften für den kennzeichnenden Teil des neuen Anspruchs 5 sind Jasperneite J. et. al: "A proposal for a Generic Real-Time Ethernet System", IEEE Transactions on Industrial Informatics, 2009-05-01, p. 75-78, US 2010/008372 A1 sowie US 2015/117177 A1.

Es ist daher Aufgabe der vorliegenden Erfindung, ein optimiertes Verfahren zum Routen von Telegrammen in einem Automatisierungsnetzwerk anzugeben, das unabhängig von der Größe des Automatisierungsnetzwerks einsetzbar ist und im Falle des Austauschs eines Netzwerkteilnehmers keinen Lernprozess eines Netzwerkverteilers zur Kommunikation mit dem Netzwerkteilnehmer erforderlich macht. Es ist weiterhin Aufgabe der Erfindung die Vertraulichkeit der Datenübertragung in einem Automatisierungsnetzwerk mithilfe einer verbesserten Datenstruktur zu erhöhen und ein verbessertes Automatisierungsnetzwerk sowie einen verbesserten Netzwerkverteiler anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zum Routen von Telegrammen in einem Automatisierungsnetzwerk und ein zugehöriges Automatisierungsnetzwerk vorgeschlagen. Das Automatisierungsnetzwerk umfasst Netzwerkteilnehmer, die über ein Datenleitungsnetz miteinander verbunden sind. Wenigstens ein Netzwerkteilnehmer ist als Masterteilnehmer ausgebildet und versendet Telegramme über das Datenleitungsnetz an die Netzwerkteilnehmer. Überdies ist wenigstens ein Netzwerkteilnehmer als Netzwerkverteiler ausgebildet, der mehrere Ein-/Ausgangs-Ports aufweist, wobei die Ein-/Ausgangs-Ports, an die jeweils Segmente mit Netzwerkteilnehmern angeschlossen sind, als End-Ports ausgezeichnet sind. An die End-Ports des Netzwerkverteilers sind Segmente mit weiteren Netzwerkteilnehmern über das Datenleitungsnetz angeschlossen. Der Masterteilnehmer weist den End-Ports jeweils eine Portadresse zu. Ferner weist der Masterteilnehmer einem Telegramm, das für ein Segment mit Netzwerkteilnehmern zur Verarbeitung bestimmt ist, als Kennung die Portadresse des End-Ports, an dem das Segment mit Netzwerkteilnehmern angeschlossen ist, zu. Empfängt der Netzwerkverteiler ein Telegramm mit einer Portadresse eines End-Ports des Netzwerkverteilers als Kennung, so gibt der Netzwerkverteiler das Telegramm direkt über den Ein-/Ausgangs-Port des Netzwerkverteilers aus, der dem End-Port der Portadresse entspricht. Die Portadressen der End-Ports des Netzwerkverteilers sind als fortlaufende Reihe ausgebildet,
wobei der Netzwerkverteiler auf der Grundlage von Operatoren aus einer Menge der fortlaufenden Reihe eine Teilmenge der fortlaufenden Reihe für das Routing der Telegramme mit Portadressen als Kennungen selektieren kann, und
wobei die Operatoren als Vergleichsoperatoren und/oder als logische Operatoren ausgebildet sind.

Mithilfe des vorgeschlagenen Verfahrens können Telegramme mit Portadressen als Kennung, die einem End-Port des Netzwerkverteilers zugeordnet sind, aufgrund der Zuordnung der Portadresse zu einem End-Port, direkt vom Netzwerkverteiler ohne kompliziertes Routingverfahren mit einer komplexen Routingtabelle, über den entsprechenden End-Port ausgegeben werden.

Somit kann der Durchsatz bei der Telegrammübertragung im Vergleich zu herkömmlichen Routingverfahren in vorteilhafter Weise erhöht werden. Sind die Portadressen der End-Ports des Netzwerkverteilers als fortlaufende Reihe ausgebildet, so kann der Netzwerkverteiler in vorteilhafter Weise ein vereinfachtes Routing auf der Grundlage der Portadressen mittels Vergleichs- und/oder logischen Operatoren durchführen. Zum Beispiel kann der Netzwerkverteiler Telegramme mit Portadressen als Kennungen, die einen Zahlenwert >= 5 und <= 8 aufweisen, über die als Weiterleitungs-Ports ausgezeichneten Ein-/Ausgangs-Ports des Netzwerkverteilers routen. Dabei kann die fortlaufende Reihe zum Beispiel in Form von Symbolen, Zahlenwerten, einer Kombination aus Symbolen und Zahlenwerten, etc. ausgebildet sein.

In einer weiteren Ausführungsform umfasst der Netzwerkverteiler Ein-/Ausgangs-Ports, die als Weiterleitungs-Ports ausgezeichnet sind. An die Weiterleitungs-Ports sind zusätzlich zu Netzwerkteilnehmern (800) weitere Netzwerkverteiler (120, 130, 140) über das Datenleitungsnetz (200) angeschlossen. Empfängt der Netzwerkverteiler ein Telegramm mit einer Kennung, die nicht einer Portadresse eines End-Ports des Netzwerkverteilers entspricht, so routet der Netzwerkverteiler das Telegramm über einen in einer Routingtabelle hinterlegten Weiterleitungs-Port des Netzwerkverteilers. Die für das Routing relevanten Einträge in der Routingtabelle beschränken sich in vorteilhafter Weise auf die Portadresse, die auch als Destination Address (DST) ausgebildet sein kann, und auf den Ein-/Ausgangs-Port des Netzwerkverteilers, der als Weiterleitungs-Port ausgezeichnet ist. Somit kann aufgrund der effizienten Informationsnutzung in der Routingtabelle Speicherplatz eingespart werden. Dies kann in vorteilhafter Weise zur Senkung der Kosten beitragen.

Alternativ ist das Routing der Telegramme von dem Netzwerkverteiler auch über VLAN-IDs möglich, falls die Telegramme von dem Masterteilnehmer mit einem VLAN Tag gesendet werden, oder über MAC-Adressen, wobei dann jeweils ein Segment mit Netzwerkteilnehmern eine VLAN-ID bzw. eine MAC Adresse erhält, mit der die Telegramme von dem Netzwerkverteiler an das jeweilige Segment geroutet werden können. Auch erfordert das vorgeschlagene Verfahren keinen Lernprozess des Netzwerkverteilers, wenn ein Netzwerkteilnehmer in einem Segment getauscht wird. Denn ein getauschter Netzwerkteilnehmer erhält keinen neuen Eintrag in der Routingtabelle des Netzwerkverteilers, da der Netzwerkteilnehmer nur über das zugeordnete Segment, in dem der getauschte Netzwerkteilnehmer angeordnet ist, angesprochen werden kann. Da die Portadresse in dem Fall unverändert ist, kann instantan eine Kommunikation mit dem Netzwerkteilnehmer erfolgen.

Gemäß einer weiteren Ausführungsform ist der Weiterleitungs-Port gleichzeitig als End-Port ausgezeichnet. Der Masterteilnehmer ist ausgelegt, Telegramme, die für eine Verarbeitung durch die Netzwerkteilnehmer gesperrt sind und dazu jeweils einen ersten Wert eines Datenelements eines ersten Datenfelds im Telegramm aufweisen, über das Datenleitungsnetz zu versenden. Empfängt der Netzwerkverteiler ein Telegramm mit einer Portadresse als Kennung vom Masterteilnehmer, das für einen End-Port des Netzwerkverteilers bestimmt ist und für die Verarbeitung durch die Netzwerkteilnehmer gesperrt ist, so entsperrt der Netzwerkverteiler das Telegramm mit der Portadresse als Kennung und gibt das Telegramm über den entsprechenden Ein-/Ausgangs-Port, der dem End-Port der Portadresse zugeordnet ist, an das Segment mit Netzwerkteilnehmern zur Verarbeitung aus. Zur Entsperrung des Telegramms mit der Portadresse als Kennung, wird der erste Wert des Datenelements mit einem zweiten Wert des Datenelements durch den Netzwerkverteiler überschrieben, wobei der zweite Wert des Datenelements des ersten Datenfelds im Telegramm eine Freigabe der Verarbeitung des Telegramms für die Netzwerkteilnehmer anzeigt.

An dem Ein-/Ausgangs-Port des Netzwerkverteilers, der als Weiterleitungs-Port ausgezeichnet ist, kann in einem EtherCAT Netzwerk auch ein Segment mit Netzwerkteilnehmern, die als EtherCAT Slaveteilnehmer ausgebildet sind, über das Datenleitungsnetz angeschlossen sein. In dem Fall kann der als Weiterleitungs-Port ausgezeichnete Ein-/Ausgangs-Port also gleichzeitig End-Port für das Segment mit EtherCAT Slaveteilnehmern sein. Wird im Folgenden von Netzwerkteilnehmer in einem Automatisierungsnetzwerk gesprochen, so sind damit stets EtherCAT Slaveteilnehmer in einem EtherCAT Netzwerk mit umfasst. Da der Masterteilnehmer Telegramme, die für die Verarbeitung durch die Netzwerkteilnehmer gesperrt sind, versenden kann, um die Vertraulichkeit bei der Telegrammübertragung im Automatisierungsnetzwerk zu erhöhen, ist es erforderlich, dass der Netzwerkverteiler ein solches Telegramm vor der Ausgabe über den der Portadresse zugeordneten Ein-/Ausgangs-Port des Netzwerkverteilers, der als End-Port ausgezeichnet ist, für die Verarbeitung freizugeben, damit die Netzwerkteilnehmer in dem entsprechenden Segment das Telegramm verarbeiten können. Gibt der Netzwerkverteiler das Telegramm jedoch über den als Weiterleitungs-Port ausgezeichneten Ein-/Ausgangs-Port über das Datenleitungsnetz an einen weiteren Netzwerkverteiler aus, so entsperrt der Netzwerkverteiler das Telegramm in der Regel vor der Ausgabe nicht, da zwischen dem Netzwerkverteiler und einem weiteren Netzwerkverteiler beispielsweise weitere Netzwerkteilnehmer über das Datenleitungsnetz angeschlossen sein können, die das Telegramm verarbeiten könnten. In dem Beispielsfall würde erst der weitere Netzwerkverteiler das Telegramm für die Verarbeitung freigeben, wenn das Telegramm zum Beispiel aufgrund der Portadresse als Kennung des Telegramms direkt von dem weiteren Netzwerkverteiler über einen als End-Port ausgezeichneten Ein-/Ausgangs-Port des weiteren Netzwerkverteilers ausgegeben wird, der der Portadresse zugeordnet ist.

Umgekehrt kann der Netzwerkverteiler ein Telegramm auch für die Verarbeitung durch die Netzwerkteilnehmer sperren, wenn der Netzwerkverteiler ein für die Verarbeitung freigegebenes Telegramm von einem vorangehenden Netzwerkverteiler in dem Automatisierungsnetzwerk empfängt, das für kein direkt über einen als End-Port ausgezeichneten Ein-/Ausgangs-Port des Netzwerkverteilers angeschlossenes Segment mit Netzwerkteilnehmern bestimmt ist. Auch auf diese Weise kann die Vertraulichkeit bei der Telegrammübertragung mithilfe des erfindungsgemäßen Verfahrens erhöht werden.

Gemäß einer weiteren Ausführungsform versendet der Masterteilnehmer zur Erfassung der Ein-/Ausgangs-Ports des Netzwerkverteilers Abfragetelegramme über das Datenleitungsnetz.

Der Masterteilnehmer ordnet nach dem Erhalt eines Abfragetelegramms von dem Netzwerkverteiler mit einer Port-Information über die Ein-/Ausgangs-Ports des Netzwerkverteilers, den einzelnen Ein-/Ausgangs-Ports des Netzwerkverteilers, an die jeweils Segmente mit Netzwerkteilnehmern angeschlossen sind und als End-Ports ausgebildet sind, die Portadresse zu. Das vorgeschlagene Verfahren ermöglicht eine zentrale Konfiguration des Automatisierungsnetzwerks vom Masterteilnehmer. Der Masterteilnehmer kann auf diese Weise auch weitere Netzwerkverteiler im Automatisierungsnetzwerk einstellen und ein-eindeutige Portadressen für die Ein-/Ausgangs-Ports, die als End-Ports ausgezeichnet sind, vergeben, um die Segmente mit Netzwerkteilnehmer gezielt mit Telegrammen ansprechen bzw. adressieren zu können.

In einer weiteren Ausführungsform ist die Datenstruktur als Telegramm ausgebildet, wobei das Telegramm einen Kopfabschnitt, einen Datenabschnitt und einen Endabschnitt aufweist. Der Kopfabschnitt umfasst die Portadresse als Kennung. Der Datenabschnitt weist ein erstes Datenfeld mit einem Datenelement mit einem ersten oder zweiten Wert auf. Der Endabschnitt umfasst ein Prüfsummenfeld für eine Integritätsprüfung von versendeten Daten. Das Datenelement weist den ersten Wert auf, wenn das Telegramm für die Verarbeitung durch die Netzwerkteilnehmer gesperrt ist und das Datenelement weist den zweiten Wert auf, wenn das Telegramm für die Verarbeitung durch die Netzwerkteilnehmer entsperrt ist. Durch Auswerten der Portadresse als Kennung im Kopfabschnitt des Telegramms kann der Netzwerkverteiler das Telegramm zügig über den der Portadresse zugeordneten End-Port des Netzwerkverteilers direkt ausgeben oder über den Weiterleitungs-Port des Netzwerkverteilers über das Datenleitungsnetz an weitere Netzwerkverteiler ausgeben. Mithilfe des ersten Datenfelds mit dem Datenelement, das einen ersten oder zweiten Wert aufweist, kann der Masterteilnehmer eine Sperrung oder eine Freigabe der Verarbeitung des Telegramms für die Netzwerkteilnehmer anzeigen. Der Netzwerkverteiler kann, wenn das Telegramm aufgrund der Portadresse als Kennung direkt einem End-Port des Netzwerkverteilers zugeordnet ist, das Telegramm für das angeschlossene Segment mit Netzwerteilnehmern für die Verarbeitung freigeben, indem der Netzwerkverteiler den Wert, der die Sperrung anzeigt mit dem anderen Wert überschreibt. Ferner kann das erste Datenfeld mit dem Datenelement für die Anzeige der Sperrung/Freigabe eines Telegramms für die Verarbeitung variabel für verschiedene Datenübertragungsprotokolle eingesetzt werden und ist beispielsweise nicht auf das echtzeitfähige EtherCAT Datenübertragungsprotokoll beschränkt.

Gemäß einer weiteren Ausführungsform ist das Automatisierungsnetzwerk als EtherCAT Netzwerk ausgebildet und das Telegramm als EtherCAT Telegramm ausgebildet. Das EtherCAT Telegramm umfasst im Kopfabschnitt ein TAG-Feld, das ein zweites, drittes, viertes und fünftes Datenfeld aufweist. Das zweite Datenfeld des TAG-Feldes umfasst eine TAG-Protokoll-Identifikation zur Kennzeichnung des TAG-Feldes im Kopfabschnitt des EtherCAT Telegramms. Das dritte und vierte Datenfeld des TAG-Feldes umfassen die als Kennung ausgebildete Portadresse des EtherCAT Telegramms, die eine Ziel-Portadresse und eine Absender-Portadresse aufweist. Das fünfte Datenfeld umfasst eine Fragmentier-Information, sofern das Telegramm fragmentiert wird. Der Datenabschnitt umfasst einen weiteren Kopfabschnitt, der ein Längenfeld, ein Reservefeld und das erste Datenfeld aufweist. Das erste Datenfeld ist als Typfeld und das Datenelement ist als EtherCAT Protokolltyp ausgebildet. Ist das EtherCAT Telegramm für die Verarbeitung durch die Netzwerkteilnehmer gesperrt, so weist der EtherCAT Protokolltyp den ersten Wert auf. Ist das EtherCAT Telegramm für die Verarbeitung durch die Netzwerkteilnehmer entsperrt, so umfasst der EtherCAT Protokolltyp den zweiten Wert.

Das Telegramm kann vorteilhaft als EtherCAT Telegramm ausgebildet sein und das bewährte echtzeitfähige EtherCAT Datenübertragungsprotokoll nutzen, wobei der weitere Kopfabschnitt des Telegramms dann als EtherCAT Telegramm Kopfabschnitt ausgebildet ist. Dabei umfasst der EtherCAT Protokolltyp des Typfelds den zweiten Wert, der standardmäßig mit dem Wert eins (in der Darstellung des Hexadezimalsystems) die Freigabe der Verarbeitung des Telegramms, das heißt eine Adressierung der Slaveteilnehmer eines Segments angibt. Das Typfeld kann als 4 Bit umfassendes Feld ausgestaltet sein, wobei damit eine Darstellung von 16 verschiedenen Protokolltypen möglich ist (2⁴ = 16) und dadurch einfach ein weiterer Wert des Protokolltyps für die Sperrung der Verarbeitung des Telegramms genutzt werden kann. Der weitere Wert des Protokolltyps, also der erste Wert des EtherCAT Protokolltyps, der verschieden von dem zweiten Wert ausgebildet ist, kann folglich für die Anzeige der Sperrung der Verarbeitung des Telegramms für die Slaveteilnehmer eines Segments umgesetzt werden. Vorzugsweise ist der EtherCAT Protolltyp eines Telegramms in dem EtherCAT Kopfabschnitt des Telegramms angeordnet, sodass die Netzwerkteilnehmer frühzeitig eine Freigabe des Telegramms für die Verarbeitung oder eine Sperrung des Telegramms für die Verarbeitung erkennen können und ohne Verzögerung mit der Verarbeitung oder der Weiterleitung an den nächsten Netzwerkteilnehmer beginnen können. Auf diese Weise kann der Durchsatz bei der Telegrammübertragung erhöht werden.

Erfindungsgemäß wird des Weiteren ein Netzwerkverteiler für ein Automatisierungsnetzwerk vorgeschlagen, wobei der Netzwerkverteiler ausgelegt ist, ein Verfahren zum Routen von Telegrammen auszuführen. Der Netzwerkverteiler kann eine Verarbeitungseinheit umfassen, die in Form einer Software oder als Hardware umgesetzt sein kann und eine Routingeinheit sowie einen Protokollchip aufweisen. Insbesondere ist denkbar, dass die Verarbeitungseinheit mehrere Hardware Komponenten oder Hardware Module umfasst. Der Protokollchip kann in einem EtherCAT Netzwerk vorzugsweise als EtherCAT Slave Controller ausgebildet sein und den Netzwerkverteiler als vollwertigen Slaveteilnehmer auszeichnen, so dass der Netzwerkverteiler zusätzlich auch in der Lage sein kann, Telegramme von dem Masterteilnehmer zu verarbeiten. Neben der Auszeichnung des Netzwerkverteilers als Slaveteilnehmer kann der Netzwerkverteiler zusätzlich die Telegramme des Masterteilnehmers über die Weiterleitungs-Ports des Netzwerkverteilers mithilfe der Routingeinheit routen, die zum Beispiel auf die in der Speichereinheit des EtherCAT Slave Controllers hinterlegte Routingtabelle zugreift oder über die End-Ports des Netzwerkverteilers direkt ausgeben. Der Netzwerkverteiler kann einfach in bestehende Automatisierungsnetzwerke integriert werden, da der erfindungsgemäße Netzwerkverteiler auf die bewährte EtherCAT Technologie aufbaut und mit bestehenden EtherCAT Netzwerken kompatibel ist.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkverteilern, das für eine Ausführung eines Verfahrens zum Routen von Telegrammen ausgelegt ist;
Figur 2 einen schematischen Aufbau einer Datenstruktur zur Verwendung in dem Verfahren; und
Figur 3 einen schematischen Aufbau einer weiteren Datenstruktur zur Verwendung in dem Verfahren.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke sind üblicherweise als Feldbussysteme verwirklicht, bei denen die Netzwerkteilnehmer über den Feldbus miteinander vernetzt sind. Die Netzwerkteilnehmer können als wenigstens ein Masterteilnehmer, als wenigstens ein Netzwerkverteiler sowie als mehrere Netzwerkteilnehmer bzw. Slaveteilnehmer ausgebildet sein. Die genannten Netzwerkteilnehmer können dazu ausgelegt sein mit Steuerungseinheiten Daten austauschen, wobei dazu in der Regel echtzeitfähige Datenübertragungsprotokolle wie beispielsweise das EtherCAT Datenübertragungsprotokoll eingesetzt werden. Daneben kann das Automatisierungsnetzwerk auch Netzwerkteilnehmer aufweisen, die andere Datenübertragungsprotokolle verarbeiten können wie beispielsweise TCP/IP (TCP/IP: Transmission Control Protocol/Internet Protocol), Ethernet, etc. Diese Netzwerkteilnehmer müssen nicht für Steuerungsaufgaben adressiert sein. Beispielsweise können diese Datenübertragungsprotokoll-Daten Diagnoseinformationen über das Automatisierungsnetzwerk umfassen. Die Erfindung wird nachfolgend beispielhaft anhand des echtzeitfähigen EtherCAT Datenübertragungsprotokolls erläutert.

Die über das Datenleitungsnetz im Automatisierungsnetzwerk angeschlossenen oben genannten Netzwerkteilnehmer können über Netzwerkverteiler, sogenannte "Switche" oder "Branche" miteinander verbunden sein. Die Netzwerkverteiler dienen zudem dazu, den Datenaustausch der Teilnehmer in den Segmenten zu koordinieren und die Telegramme rechtzeitig an ihr Ziel zu leiten. Bekannte Verfahren zum Routen der Telegramme durch die Netzwerkverteiler nutzen MAC-Adressen der einzelnen Netzwerkteilnehmer bzw. VLAN-IDs der Netzwerkteilnehmer. Nachteilig an den Verfahren ist jedoch der Umstand, dass keine instantane Kommunikation mit einem getauschten Netzwerkteilnehmer möglich ist, da ein Netzwerkverteiler in der Regel die neue MAC-Adresse bzw. die neue VLAN-ID des getauschten Netzwerkteilnehmers erst mithilfe eines Lernprozesses in der Routingtabelle hinterlegen kann. Auch erfordert die Routingtabelle für jede Kombination von sendendem und empfangenden Netzwerkteilnehmer jeweils die zugehörigen MAC-Adressen bzw. VLAN-IDs und die Ein-/Ausgangs-Ports des Netzwerkverteilers, die dabei als Eingangs-Port und als Ausgangs-Port ausgebildet sind.

Die Kernidee der vorliegenden Erfindung liegt daher in der Bereitstellung eines vereinfachten Verfahrens zum Routen von Telegrammen in einem Automatisierungsnetzwerk, bei dem die Ein-/Ausgangs-Ports des Netzwerkverteilers in ausgezeichnete End-Ports und Weiterleitungs-Ports unterteilt werden, wobei an die End-Ports Segmente mit Netzwerkteilnehmern über ein Datenleitungsnetz angeschlossen sind und an die Weiterleitungs-Ports zusätzlich zu Netzwerkteilnehmern weitere Netzwerkverteiler über das Datenleitungsnetz angeschlossen sein können. Ein vereinfachtes Routing kann dadurch erreicht werden, dass den End-Ports des Netzwerkverteilers ein-eindeutige Portadressen zugeordnet sind, über die der Netzwerkverteiler ein Telegramm mit einer Kennung als Portadresse einem End-Port des Netzwerkverteilers zuordnen kann und der Netzwerkverteiler ein solches Telegramm direkt über den entsprechenden End-Port an das Segment mit Netzwerkteilnehmer ausgeben kann, für das das Telegramm bestimmt ist. Bilden die Portadressen der End-Ports des Netzwerkverteilers und weiterer Netzwerkverteiler eine fortlaufende Reihe, so kann das Routing der Telegramme über den oder die Weiterleitungs-Ports des Netzwerkverteilers vorteilhaft mithilfe von Vergleichsoperatoren und/oder logischen Operatoren auf eine Teilmenge der Menge der im Automatisierungsnetzwerk vorhandenen Portadressen beschränkt werden. Die Erfindung ist hierbei nicht auf die Verwendung des EtherCAT Datenübertragungsprotokolls beschränkt, auch wenn dies das bevorzugte Datenübertragungsprotokoll darstellt, sondern kann in allen Automatisierungsnetzwerken eingesetzt werden, in denen Telegramme geroutet werden sollen.

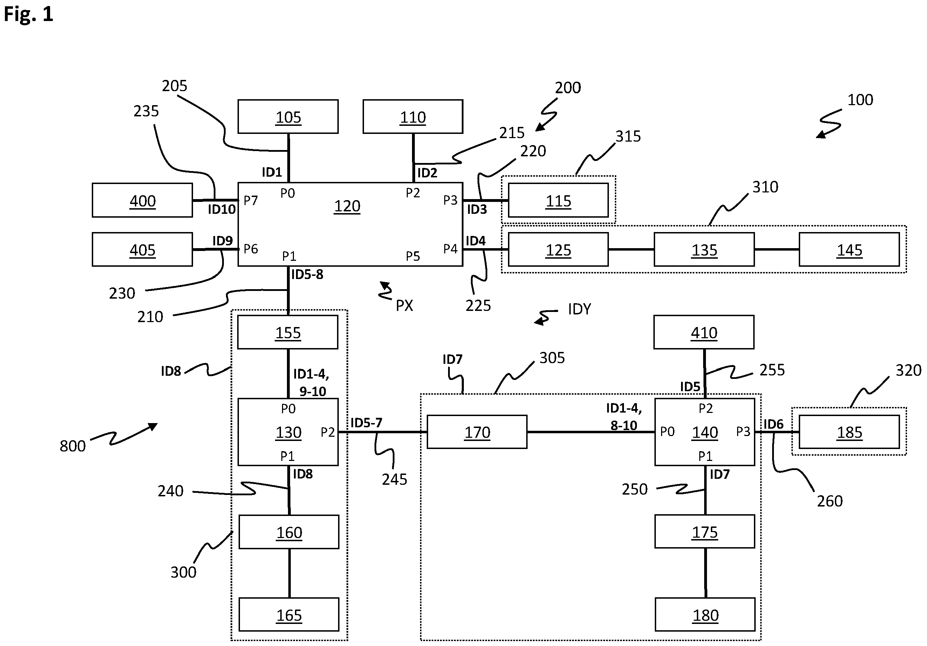

Der Aufbau und die Funktionsweise des erfindungsgemäßen Automatisierungsnetzwerks und des Netzwerkverteilers wird nachfolgend anhand der Figuren 1 bis 3 beschrieben, wobei in der Beschreibung, sofern sinnvoll und erforderlich, die zugehörigen Bezugszeichen aus den drei Figuren Verwendung finden.

Figur 1 zeigt einen schematischen Aufbau eines Automatisierungsnetzwerks 100 mit Netzwerkteilnehmern 800, das für ein Verfahren zum Routen von Telegrammen ausgelegt ist. Das Automatisierungsnetzwerk 100 umfasst Netzwerkteilnehmer 800, die über ein Datenleitungsnetz 200 miteinander verbunden sind. Wenigstens ein Netzwerkteilnehmer 800 des Automatisierungsnetzwerks 100 ist als ein Masterteilnehmer 105 ausgebildet, wenigstens ein Netzwerkteilnehmer 800 ist als Netzwerkverteiler, wie in Figur 1 dargestellt beispielsweise als ein erster bis dritter Netzwerkverteiler 120, 130, 140, ausgelegt und zudem gibt es weitere Netzwerkteilnehmer 800 die beispielsweise als weiterer Masterteilnehmer 110 und als erster bis vierzehnter Netzwerkteilnehmer 110, 115, 125, 135, 145, 155, 160, 165, 170, 175, 180, 185, 400, 405, 410 ausgebildet sind. Der Masterteilnehmer 105 ist über eine erste Datenleitung 205 mit einem ersten Ein-/Ausgangs-Port P0 eines ersten Netzwerkverteilers 120 verbunden. Der erste Ein-/Ausgangs-Port P0 des ersten Netzwerkverteilers 120 kann beispielsweise als ein End-Port des ersten Netzwerkverteilers 120 ausgezeichnet sein, wobei an einem End-Port ein Segment mit Netzwerkteilnehmern angeschlossen sein kann. In Figur 1 ist an dem ersten Ein-/Ausgangs-Port P0 jedoch nur der Masterteilnehmer 105 angeschlossen. Dem ersten Ein-/Ausgangs-Port P0 kann als ausgezeichneter End-Port zum Beispiel eine erste Portadresse ID1, also eine Kombination aus Symbolen und einem Zahlenwert, zugeordnet sein, über die der erste Netzwerkverteiler 120 ein Telegramm von den Netzwerkteilnehmern an den Masterteilnehmer 105 ausgeben kann, der an dem ersten Ein-/Ausgangs-Port P0 über die erste Datenleitung 205 angeschlossen ist.

Der erste Netzwerkverteiler 120 kann über einen dritten Ein-/Ausgangs-Port P2 über eine dritte Datenleitung 215 mit einem weiteren Masterteilnehmer 110 verbunden sein. Der dritte Ein-/Ausgangs-Port P2 des ersten Netzwerkverteilers 120 kann ebenfalls als End-Port des ersten Netzwerkverteilers 120 ausgezeichnet sein und mit einem Telegramm, das eine zweite Portadresse ID2 als Kennung aufweist, direkt von dem ersten Netzwerkverteiler 120 adressiert werden. Der erste Netzwerkverteiler 120 gibt das Telegramm mit der zweiten Portadresse ID2 als Kennung über den als End-Port ausgezeichneten dritten Ein-/Ausgangs-Port P2 des ersten Netzwerkverteilers 120 über die dritte Datenleitung 215 an den weiteren Masterteilnehmer 110 aus. Beispielsweise kann nur der Masterteilnehmer 105, der über die erste Datenleitung 205 mit dem ersten Ein-/Ausgangs-Port P0 des ersten Netzwerkverteilers 120 verbunden ist, dazu ausgelegt sein, eine zentrale Konfiguration des Automatisierungsnetzwerks 100 mit seinen Netzwerkverteilern und Netzwerkteilnehmern vorzunehmen.

Über einen vierten Ein-/Ausgangs-Port P3 des ersten Netzwerkverteilers 120 und eine vierte Datenleitung 220 kann der erste Netzwerkverteiler 120 mit einem vierten Segment 315 des Automatisierungsnetzwerks 100 verbunden sein. Beispielsweise kann das vierte Segment 315 einen ersten Netzwerkteilnehmer 115 umfassen. Zur besseren Übersichtlichkeit werden in Figur 1 lediglich die Ein-/Ausgangs-Ports der Netzwerkverteiler dargestellt. Gleichwohl weisen die anderen Teilnehmer in dem Automatisierungsnetzwerk 100 Ein-/Ausgangs-Ports auf, über die die Teilnehmer über das Datenleitungsnetz 200 miteinander verbunden sind. Nachfolgend wird auf diesen Aspekt nicht mehr eingegangen. Der erste Netzwerkteilnehmer 115 kann dabei beispielsweise als Kopplerelement EK1100 der Firma Beckhoff Automation GmbH & Co. KG ausgebildet sein und dazu ausgelegt sein, eine Datenkommunikation mit einer ersten Datenübertragungsrate mit 100 Mbit/s bzw. einer ersten Symbolrate von 100 MBaud zu ermöglichen und Telegramme des Masterteilnehmers 105 zu verarbeiten. Der erste Netzwerkteilnehmer 115 kann demnach als ein Slaveteilnehmer ausgelegt sein, und ein Telegramm "on the fly" verarbeiten, das heißt adressierte Ausgangsdaten lesen und Eingangsdaten in ein Telegramm legen und das Telegramm an einen nachfolgenden Netzwerkteilnehmer weiterleiten bzw. andernfalls an den Masterteilnehmer 105 zurücksenden.

Wird im Folgenden von Verarbeiten gesprochen, so sind die erläuterten Schritte, die ein Netzwerkteilnehmer beim on the fly Verarbeiten eines Telegramms ausführt, damit stets mit umfasst und werden dann nicht weiter erläutert.

Das vierte Segment 315 kann exemplarisch wie beschrieben ausgebildet sein. Darüber hinaus ist denkbar, dass das vierte Segment 315 von der beschriebenen Ausgestaltung abweicht und weitere Netzwerkteilnehmer bzw. Slaveteilnehmer umfasst, die nicht dargestellt sind. Auch der vierte Ein-/Ausgangs-Port P3 des ersten Netzwerkverteilers 120 ist als End-Port ausgezeichnet und ist einer dritten Portadresse ID3 zugeordnet. Der erste Netzwerkverteiler 120 kann demnach ein Telegramm mit der dritten Portadresse ID3 als Kennung direkt über den vierten Ein-/Ausgangs-Port P3 des ersten Netzwerkverteilers 120 an das vierte Segment 315 mit dem ersten Netzwerkteilnehmer 115 zur Verarbeitung ausgeben.

Der erste Netzwerkverteiler 120 kann über einen fünften Ein-/Ausgangs-Port P4 des ersten Netzwerkverteilers 120 und eine fünfte Datenleitung 225 mit einem dritten Segment 310 des Automatisierungsnetzwerks 100 verbunden sein. Der fünfte Ein-/Ausgangs-Port P4 kann als End-Port ausgezeichnet sein und vom Masterteilnehmer 105 eine vierte Portadresse ID4 zugeordnet worden sein. Der erste Netzwerkverteiler 120 kann ein Telegramm von dem Masterteilnehmer 105 mit der vierten Portadresse ID4 als Kennung direkt über den fünften Ein-/Ausgangs-Port P4 des ersten Netzwerkverteilers 120 an das dritte Segment 310 mit den Netzwerkteilnehmern zur Verarbeitung ausgeben. Das dritte Segment 310 kann einen zweiten Netzwerkteilnehmer 125, einen dritten Netzwerkteilnehmer 135 und einen vierten Netzwerkteilnehmer 145 umfassen, wobei der zweite bis vierte Netzwerkteilnehmer 125, 135, 145 jeweils als Slaveteilnehmer zur Verarbeitung der Telegramme von dem Masterteilnehmer 105 ausgelegt sein können. Der zweite Netzwerkteilnehmer 125 kann zum Beispiel als ein Kopplerelement ausgebildet sein. Der dritte Netzwerkteilnehmer 135 kann beispielsweise als Simple Branch ausgebildet sein, wobei der Simple Branch dazu ausgelegt sein kann, neben dem in dem Verfahren zur Datenübertragung verwendeten Protokoll, auch noch Routing-Funktionalität aufzuweisen und weitere Protokolle, wie zum Beispiel das TCP/IP-Protokoll (Transmission Control Protocol/Internet Protocol), zu unterstützen.

Der vierte Netzwerkteilnehmer 145 kann zum Beispiel ebenfalls als Simple Branch ausgebildet sein. Der zweite bis vierte Netzwerkteilnehmer 125, 135, 145 in dem dritten Segment 310 können gleichermaßen dazu ausgelegt sein, eine Datenkommunikation mit einer zweiten Datenübertragungsrate mit 1 Gbit/s bzw. mit einer zweiten Symbolrate von 1 GBaud umzusetzen. Das dritte Segment 310 kann also beispielsweise im Unterschied zum vierten Segment 315 statt mit der ersten Datenübertragungsrate mit 100 Mbit/s mit der zweiten Datenübertragungsrate mit 1 Gbit/s betrieben werden. Die oben genannte erste und zweite Datenübertragungsrate sowie im Folgenden genannte Datenübertragungsraten können auch abweichend von den erläuterten Werten umgesetzt werden, wie zum Beispiel die zweite Datenübertragungsrate mit 2,5 Gbit/s oder 5 Gbit/s oder 10 Gbit/s, etc..

Beispielsweise kann an einem sechsten Ein-/Ausgangs-Port P5 des ersten Netzwerkverteilers 120 keine Datenleitung mit einem oder mehreren Netzwerkteilnehmern angeschlossen sein. Demnach ist dem sechsten Ein-/Ausgangs-Port P5 keine Portadresse zugeordnet, da der sechste Ein-/Ausgangs-Port P5 nicht als End-Port des ersten Netzwerkverteilers 120 ausgezeichnet ist. Hierbei ist der sechste Ein-/Ausgangs-Port P5 exemplarisch gewählt worden. Es ist ferner denkbar, dass ein anderer Ein-/Ausgangs-Port des ersten Netzwerkverteilers 120 derart ausgebildet ist oder dass an dem sechsten Ein-/Ausgangs-Port P5 des ersten Netzwerkverteilers 120 Netzwerkteilnehmer angeschlossen sind und der sechste Ein-/Ausgangs-Port P5 als End-Port mit einer zugehörigen Portadresse ausgezeichnet ist.

Über einen siebten Ein-/Ausgangs-Port P6 und eine sechste Datenleitung 230 ist der erste Netzwerkverteiler 120 mit einem dreizehnten Netzwerkteilnehmer 405 verbunden. Der siebte Ein-/Ausgangs-Port P6 des ersten Netzwerkverteilers 120 kann ebenso als End-Port ausgezeichnet sein und mit einer neunten Portadresse ID9 adressiert werden. Der erste Netzwerkverteiler 120 kann ein Telegramm über den als End-Port ausgezeichneten siebten Ein-/Ausgangs-Port analog zur obigen Beschreibung mithilfe der neunten Portadresse ID9 als Kennung des Telegramms ausgeben. Beispielsweise kann der dreizehnte Netzwerkteilnehmer 405 nicht als Netzwerkteilnehmer, der das EtherCAT Datenübertragungsprotokoll verarbeitet, sondern als Ethernet Teilnehmer ausgebildet sein, wobei für den Ethernet Teilnehmer charakteristisch sein kann, lediglich Telegramme mit zugrundeliegendem Ethernet Datenübertragungsprotokoll zu verarbeiten. In diesem Zusammenhang ist denkbar, dass der dreizehnte Netzwerkteilnehmer 405 kein eigenständiges Segment im Automatisierungsnetzwerk bildet. Beispielsweise ist der dreizehnte Netzwerkteilnehmer 405 dazu ausgelegt, die Datenkommunikation mit der zweiten Datenübertragungsrate mit 1 Gbit/s umzusetzen.

Über einen achten Ein-/Ausgangs-Port P7 und eine siebte Datenleitung 235 kann der erste Netzwerkverteiler 120 mit einem zwölften Netzwerkteilnehmer 400 verbunden sein. Der achte Ein-/Ausgangs-Port P7 des ersten Netzwerkverteilers 120 kann als End-Port ausgezeichnet sein und mit einer zehnten Portadresse ID10 adressiert werden. Für die Ausgabe eines Telegramms mit der zehnten Portadresse ID10 als Kennung gilt die obige Beschreibung analog. Der zwölfte Netzwerkteilnehmer 400 kann ebenfalls ausgelegt sein, das Ethernet Datenübertragungsprotokoll zu verarbeiten und einen Ethernet Teilnehmer darstellen. Beispielsweise kann der Ethernet Teilnehmer ausgebildet sein die Datenkommunikation mit der ersten Datenübertragungsrate mit 100 Mbit/s umzusetzen. Gleichermaßen wie der dreizehnte Netzwerkteilnehmer 405 kann auch der zwölfte Netzwerkteilnehmer 400 kein eigenständiges Segment in dem Automatisierungsnetzwerk 100 bilden.

Über einen zweiten Ein-/Ausgangs-Port P1 und eine zweite Datenleitung 210 kann der erste Netzwerkverteiler 120 mit einem fünften Netzwerkteilnehmer 155 verbunden sein. Der fünfte Netzwerkteilnehmer 155 kann für eine Datenkommunikation mit der zweiten Datenübertragungsrate ausgelegt sein. Der fünfte Netzwerkteilnehmer 155 kann über die zweite Datenleitung 210 mit einem ersten Ein-/Ausgangs-Port P0 eines zweiten Netzwerkverteilers 130 verbunden sein und als Slaveteilnehmer zur Verarbeitung von Telegrammen von dem Masterteilnehmer 105 ausgebildet sein.

Der zweite Netzwerkverteiler 130 kann über einen zweiten Ein-/Ausgangs-Port P1 des zweiten Netzwerkverteilers 130 und über eine achte Datenleitung 240 mit einem sechsten Netzwerkteilnehmer 160 verbunden sein. Zum Beispiel kann der sechste Netzwerkteilnehmer 160 ebenfalls als oben stehender Simple Branch ausgebildet sein und Telegramme des Masterteilnehmers 105 verarbeiten. Weiterhin kann der sechste Netzwerkteilnehmer 160 nachfolgend an der achten Datenleitung 240 einen siebten Netzwerkteilnehmer 165 aufweisen. Der siebte Netzwerkteilnehmer 165 kann den letzten Netzwerkteilnehmer in einem ersten Segment 300 bilden, das sich von dem fünften Netzwerkteilnehmer 155 bis zum siebten Netzwerkteilnehmer 165 erstreckt, da die Netzwerkteilnehmer in den einzelnen Segmenten in der Regel in einer Kette angeordnet sind. Ferner kann der siebte Netzwerkteilnehmer 165 als ein Kopplerelement ausgebildet sein und für die Verarbeitung der Telegramme von dem Masterteilnehmer 105 geeignet sein.

Beispielsweise kann der zweite Netzwerkverteiler 130 Teil des ersten Segments 300 sein, sofern der zweite Ein-/Ausgangs-Port P1 des zweiten Netzwerkverteilers 130 dafür eingestellt ist. Demnach kann der zweite Ein-/Ausgangs-Port P1 des ersten Netzwerkverteilers 120 als End-Port ausgezeichnet sein, wobei dem End-Port das erste Segment 300 mit dem fünften Netzwerkteilnehmer 155, dem zweiten Netzwerkverteiler 130, dem sechsten Netzwerkteilnehmer 160 und dem siebten Netzwerkteilnehmer 165 zugeordnet sein kann. Der erste Netzwerkverteiler 120 kann ein Telegramm mit einer achten Portadresse ID8 als Kennung zum Beispiel direkt über den als End-Port ausgezeichneten zweiten Ein-/Ausgangs-Port P1 des ersten Netzwerkverteilers 120 an den fünften Netzwerkteilnehmer 155, der den ersten Netzwerkteilnehmer des ersten Segments 300 bildet, zur Verarbeitung ausgeben.

Das erste Segment 300, beginnend mit dem fünften Netzwerkteilnehmer 155 und umfassend den zweiten Netzwerkverteiler 130, den sechsten Netzwerkteilnehmer 160 und den siebten Netzwerkteilnehmer 165, kann für eine Datenkommunikation mit der zweiten Datenübertragungsrate mit 1 Gibt/s ausgelegt sein, da der fünfte Netzwerkteilnehmer 155, der sechste Netzwerkteilnehmer 160 und der siebte Netzwerkteilnehmer 165 beispielsweise derart ausgelegt sind. Es ist jedoch auch denkbar, dass der fünfte Netzwerkteilnehmer 155, der sechste Netzwerkteilnehmer 160 und der siebte Netzwerkteilnehmer 165 gleichermaßen wie der erste Netzwerkverteiler 120 und der zweite Netzwerkverteiler 130 in der Lage sind, sowohl die zweite Datenübertragungsrate mit 1 Gbit/s als auch die erste Datenübertragungsrate mit 100 Mbit/s umzusetzen. In diesem Zusammenhang kann das erste Segment 300 weitere, nicht dargestellte Netzwerkteilnehmer umfassen, die ausgelegt sind, die erste Datenübertragungsrate umzusetzen. In dem geschilderten Fall kann die Datenübertragungsrate für die Teilnehmer des ersten Segments 300 einheitlich auf die erste Datenübertragungsrate gesetzt werden. Dies gilt für die anderen Segmente gleichermaßen, auch sie können weitere Netzwerkteilnehmer aufweisen, die ausgelegt sind nur die erste Datenübertragungsrate umzusetzen. Für die Beschreibung der anderen Segmente wird jedoch nicht erneut auf diese Eigenschaft hingewiesen.

Über einen dritten Ein-/Ausgangs-Port P2 und eine neunte Datenleitung 245 ist der zweite Netzwerkverteiler 130 mit einem achten Netzwerkteilnehmer 170 verbunden. Der achte Netzwerkteilnehmer 170 bildet beispielsweise den ersten Netzwerkteilnehmer in einem zweiten Segment 305 und kann für die Verarbeitung der Telegramme von dem Masterteilnehmer 105 als Slaveteilnehmer vorgesehen sein. Der achte Netzwerkteilnehmer 170 kann zum Beispiel für eine Datenkommunikation mit der zweiten Datenübertragungsrate ausgelegt sein. Demnach kann der dritte Ein-/Ausgangs-Port P2 des zweiten Netzwerkverteilers 130 als End-Port für das zweite Segment 305 ausgezeichnet sein und mit einer siebten Portadresse ID7 adressiert werden. Der achte Netzwerkteilnehmer 170 ist über die achte Datenleitung 240 ferner mit einem ersten Ein-/Ausgangs-Port P0 eines dritten Netzwerkverteilers 140 verbunden. Der dritte Netzwerkverteiler 140 kann Teil des zweiten Segments 305 sein, sofern ein zweiter Ein-/Ausgangs-Port P1 des dritten Netzwerkverteilers 130 dafür eingestellt ist.

Über einen dritten Ein-/Ausgangs-Port P2 und eine elfte Datenleitung 255 kann der dritte Netzwerkverteiler 140 mit einem vierzehnten Netzwerkteilnehmer 410 verbunden sein. Der dritte Ein-/Ausgangs-Port P2 des dritten Netzwerkverteilers 140 kann hierbei ein ausgezeichneter End-Port des dritten Netzwerkverteilers 140 sein und eine fünfte Portadresse ID5 vom Masterteilnehmer 105 zugewiesen bekommen haben. Zum Beispiel ist der vierzehnte Netzwerkteilnehmer 410 als Ethernet Switch ausgebildet, der das Ethernet Datenübertragungsprotokoll verarbeitet. In dem Automatisierungsnetzwerk 100 kann für den vierzehnten Netzwerkteilnehmer 410 gleichermaßen wie für den zwölften und dreizehnten Netzwerkteilnehmer 400, 405 vorgesehen sein, kein eigenständiges Segment des Automatisierungsnetzwerks 100 zu bilden, da beispielsweise nur Netzwerkteilnehmer, die das EtherCAT Datenübertragungsprotokoll verarbeiten dafür vorgesehen sind.

Gleichwohl kann der Masterteilnehmer 105 jedoch im Rahmen eines Verfahrens zur Erfassung der Netzwerkteilnehmer des Automatisierungsnetzwerks 100 mittels Abfragetelegrammen, also ihm Rahmen der zentralen Konfiguration des Automatisierungsnetzwerks 100, dem dritten Ein-/Ausgangs-Port P2 des dritten Netzwerkverteilers 140 die fünfte Portadresse ID5 zugeordnet haben, nachdem der dritte Netzwerkverteiler 140 eine Port-Information über die Ein-/Ausgangs-Ports des dritten Netzwerkverteilers 140, an denen jeweils Segmente mit Netzwerkteilnehmern angeschlossen sind, in dem Abfragetelegramm an den Masterteilnehmer 105 eingetragen worden ist. Mit einem weiteren Abfragetelegramm, das der dritte Netzwerkverteiler 140 über den dritten Ein-/Ausgangs-Port P2 über die elfte Datenleitung 255 ausgibt, kann der Masterteilnehmer 105 den vierzehnten Netzwerkteilnehmer 410 in einem nächsten Schritt als Ethernet Switch erfasst haben. Das Beispiel zur Erfassung des vierzehnten Netzwerkteilnehmers 410 von dem Masterteilnehmer 105 gilt für den zwölften und dreizehnten Netzwerkteilnehmer 400, 405 sowie die übrigen Netzwerkteilnehmer, die in Segmenten angeordnet sind, analog.

Der dritte Netzwerkverteiler 140 kann über einen vierten Ein-/Ausgangs-Port P3 und eine zwölfte Datenleitung 260 mit einem elften Netzwerkteilnehmer 185 eines fünften Segments 320 des Automatisierungsnetzwerks 100 verbunden sein. Der vierte Ein-/Ausgangs-Port P3 des dritten Netzwerkverteilers 140 kann ebenfalls als End-Port ausgezeichnet sein und vom Masterteilnehmer 105 eine sechste Portadresse ID6 zugeordnet bekommen haben, zur Adressierung des fünften Segments 320 mit dem elften Netzwerkteilnehmer 185. Beispielsweise kann der elfte Netzwerkteilnehmer 185 ausgelegt sein die erste Datenübertragungsrate umzusetzen und Telegramme von dem Masterteilnehmer 105 zu verarbeiten.

Über einen zweiten Ein-/Ausgangs-Port P1 des dritten Netzwerkverteilers 140 und eine zehnte Datenleitung 250 kann der dritte Netzwerkverteiler 140 mit einem neunten Netzwerkteilnehmer 175 verbunden sein. Der neunte Netzwerkteilnehmer 175 kann Teil des zweiten Segments 305 und als ein Kopplerelement ausgebildet sein, um Telegramme von dem Masterteilnehmer 105 als ein Slaveteilnehmer zu verarbeiten. Der neunte Netzwerkteilnehmer 175 kann für die Umsetzung der zweiten Datenübertragungsrate ausgelegt sein. Nachfolgend an den neunten Netzwerkteilnehmer 175 kann an die zehnte Datenleitung 250 ein zehnter Netzwerkteilnehmer 180 angeschlossen sein, der ebenfalls als Slaveteilnehmer zur Verarbeitung der Telegramme von dem Masterteilnehmer 105 ausgelegt sein kann und als Simple Branch verwirklicht sein kann. Der zehnte Netzwerkteilnehmer 180 kann beispielsweise den letzten Netzwerkteilnehmer, der in einer Kette angeordneten Netzwerkteilnehmer in dem zweiten Segment 305 bilden. Folglich bildet der zweite Ein-/Ausgangs-Port P1 des dritten Netzwerkverteilers 140 einen ausgezeichneten End-Port für das zweite Segment 305, das mit der siebten Portadresse ID7 adressiert werden kann. Zusammengefasst kann der Masterteilnehmer 105 mit einem Telegramm, das als Kennung die siebte Portadresse ID7 aufweist, den achten Netzwerkteilnehmer 170, den dritten Netzwerkverteiler 140, den neunten Netzwerkteilnehmer 175 sowie den zehnten Netzwerkteilnehmer 180 mit dem Telegramm ansprechen.

Der erste bis dritte Netzwerkverteiler 120, 130, 140 umfassen jeweils Ein-/Ausgangs-Ports, die als Weiterleitungs-Ports ausgezeichnet oder als sogenannte Routing-Ports verwirklicht sind. Beispielsweise ist der zweite Ein-/Ausgangs-Port P1 des ersten Netzwerkverteilers 120 neben der Eigenschaft, als End-Port für das erste Segment 300 ausgezeichnet zu sein, zusätzlich als Weiterleitungs-Port ausgezeichnet. Das heißt, der erste Netzwerkverteiler 120 kann ein Telegramm mit der achten Portadresse ID8 als Kennung, aufgrund der Zuordnung der achten Portadresse ID8 zum zweiten Ein-/Ausgangs-Port P1 direkt über den zweiten Ein-/Ausgangs-Port P1 an das erste Segment 300 ausgeben. Darüber hinaus kann der erste Netzwerkverteiler 120 ein Telegramm von dem Masterteilnehmer 105, das beispielsweise die siebte Portadresse ID7 als Kennung aufweist, über den als Weiterleitungs-Port ausgezeichneten zweiten Ein-/Ausgangs-Port P1 des ersten Netzwerkverteilers 120 routen. Insbesondere kann hierbei das Routing von dem ersten Netzwerkverteiler 120 für das Telegramm vereinfacht werden auf eine Routingentscheidung, die mithilfe von Vergleichsoperatoren und/oder logischen Operatoren getroffen werden kann. Beispielsweise kann der Masterteilnehmer 105 hierzu in der Routingtabelle des ersten Netzwerkverteilers 120 hinterlegt haben, dass der erste Netzwerkverteiler 120 Telegramme mit Portadressen, die größer gleich dem kombinierten Symbol- und Zahlenwert der fünften Portadresse ID5 und kleiner gleich dem kombinierten Symbol- und Zahlenwert der achten Portadresse ID8 ausgebildet sind, über den als Weiterleitungs-Port ausgezeichneten zweiten Ein-/Ausgangs-Port des ersten Netzwerkverteilers 120 routet. Weiterhin kann der Masterteilnehmer 105 das Telegramm mit der siebten Portadresse ID7 als Kennung für die Verarbeitung durch die Netzwerkteilnehmer sperren und dies beispielsweise mit einem ersten Wert eines Datenelements eines ersten Datenfelds im Telegramm oder eines ersten Werts eines EtherCAT Protokolltyps im Telegramm anzuzeigen, um zu verhindern, dass der erste Netzwerkverteiler 120 und der fünfte Netzwerkteilnehmer 155 das Telegramm auf dem Weg zum zweiten Netzwerkverteiler 130 verarbeiten. Ferner ist denkbar, dass die Zuordnung der Portadressen zu den als End-Ports ausgezeichneten Ein-/Ausgangs-Ports der Netzwerkverteiler vom Masterteilnehmer 105 ebenfalls in den Routingtabellen der Netzwerkverteiler hinterlegt ist.

Auch der zweite Netzwerkverteiler 130 kann einen als Weiterleitungs-Port ausgezeichneten Ein-/Ausgangs-Port aufweisen, der gleichzeitig als End-Port ausgezeichnet sein kann.

In Figur 1 ist dies beispielsweise der dritte Ein-/Ausgangs-Port P2 des zweiten Netzwerkverteilers 130. Der dritte Ein-/Ausgangs-Port P2 des zweiten Netzwerkverteilers 130 ist End-Port für das Telegramm mit der siebten Portadresse ID7 als Kennung, und ist zusätzlich der Ein-/Ausgangs-Port, über den der zweite Netzwerkverteiler 130 Telegramme mit der fünften und sechsten Portadresse ID5, ID6 als Kennungen routet. Auch in der Routingtabelle des zweiten Netzwerkverteilers 130 kann hinterlegt sein, dass der zweite Netzwerkverteiler Telegramme mit Portadressen als kombinierten Symbol-Zahlenwert größer gleich der fünften Portadresse ID5 und kleiner gleich der siebten Portadresse ID7 über den dritten Ein-/Ausgangs-Port P2 routet bzw. ausgibt. Zusätzlich kann in der Routingtabelle zum Beispiel für das Telegramm mit der siebten Portadresse ID7 als Kennung hinterlegt sein, dass der zweite Netzwerkverteiler 130 den ersten Wert des Datenelements bzw. des EtherCAT Protokolltyps des Telegramms auf den zweiten Wert setzt oder mit dem zweiten Wert überschreibt, der den Netzwerkteilnehmern des zweiten Segments 305 eine Freigabe der Verarbeitung des Telegramms anzeigt, bevor der zweite Netzwerkverteiler 130 das Telegramm über den dritten Ein-/Ausgangs-Port P2, der in dem Fall einem ausgezeichneten End-Port entspricht, und über die neunte Datenleitung 245 an das zweite Segment 305 für die Netzwerkteilnehmer zur Verarbeitung ausgibt.

Hat der letzte Netzwerkteilnehmer das Telegramm verarbeitet, so kann der dritte Netzwerkverteiler 140 das Telegramm über den ersten Ein-/Ausgangs-Port, der hierbei ausgezeichneter Weiterleitungs-Port ist, an den Masterteilnehmer 105 zurücksenden, wobei der Masterteilnehmer 105 über die erste Portadresse ID1 adressierbar ist. Denn in der Routingtabelle des dritten Netzwerkverteilers 140 kann hinterlegt sein, dass der dritte Netzwerkverteiler 140 Telegramme mit Portadressen als Kennungen als kombinierten Symbol-Zahlenwert größer gleich der ersten Portadresse ID1 und kleiner gleich der vierten Portadresse ID4 sowie größer gleich der achten Portadresse ID8 und kleiner gleich der zehnten Portadresse ID10 über den ersten Ein-/Ausgangs-Port P0 des dritten Netzwerkverteilers 140 ausgibt bzw. routet. Gleichermaßen kann auch die Routingtabelle des zweiten Netzwerkverteilers ähnlich zur obigen Erläuterung einen Eintrag aufweisen, damit der zweite Netzwerkverteiler 130 Telegramme mit Portadressen als Kennungen als kombinierten Symbol-Zahlenwert größer gleich der ersten Portadresse ID1 und kleiner gleich der vierten Portadresse ID4 sowie größer gleich der fünften Portadresse ID5 und kleiner gleich der siebten Portadresse ID7 über den ersten Ein-/Ausgangs-Port P0, als ausgezeichneten Weiterleitungs-Port, ausgeben bzw. routen kann.

Auch kann hierbei im zweiten Netzwerkverteiler 130 zusätzlich hinterlegt sein, dass wenn der zweite Netzwerkverteiler 130 ein Telegramm von dem dritten Netzwerkverteiler 140 erhält und das Telegramm für keinen als End-Port ausgezeichneten Ein-/Ausgangs-Port des zweiten Netzwerkverteilers 130 bestimmt ist, und das Telegramm zusätzlich für die Verarbeitung durch die Netzwerkteilnehmer freigegeben ist, was mit dem zweiten Wert des Datenelements bzw. des EtherCAT Protokolltyps im Telegramm angezeigt wird, den zweiten Wert des Datenelements bzw. EtherCAT Protokolltyps mit dem ersten Wert des Datenelements bzw. EtherCAT Protokolltyps zu überschreiben, damit das Telegramm auf dem Rückweg zum Masterteilnehmer 105 für die Verarbeitung durch die Netzwerkteilnehmer gesperrt ist. Der erste Netzwerkverteiler 120 gibt das erläuterte Telegramm des Beispielfalls mit der ersten Portadresse ID1 als Kennung direkt über den ersten Ein-/Ausgangs-Port P0 an den Masterteilnehmer 105 aus.

In Figur 1 sind beispielhaft drei Netzwerkverteiler, die ersten bis dritten Netzwerkverteiler 120, 130, 140 mit jeweils einer unterschiedlichen Anzahl an ersten bis achten Ein-/Ausgangs-Ports P0 bis P7 dargestellt. Je nach Aufbau des Automatisierungsnetzwerks 100 kann es auch mehr oder weniger Netzwerkverteiler als die hier in Figur 1 dargestellten ersten bis dritten Netzwerkverteiler 120, 130, 140 geben. Die einzelnen Netzwerkverteiler können wie beschrieben jeweils eine unterschiedliche Anzahl an Ein-/Ausgangs-Ports aufweisen, so dass diese im Allgemeinen auch als Ein-/Ausgangs-Ports PX bezeichnet werden können, wobei das X als Index für den Zahlenwert des jeweiligen Ein-/Ausgangs-Port steht. Auch ist die maximale Anzahl an Ein-/Ausgangs-Ports PX in einem einzelnen Netzwerkverteiler nicht auf die in Figur 1 bespielhaft dargestellte Anzahl von acht Ein-/Ausgangs-Ports PX begrenzt.

Die ersten bis zehnten Portadressen ID1 bis ID10 können im Allgemeinen auch als Portadressen IDY bezeichnet werden, wobei das Y als Index für den Zahlenwert des beschriebenen kombinierten Symbol-Zahlenwertes der einzelnen Portadressen steht. Je nach Aufbau des Automatisierungsnetzwerks 100 kann es auch mehr oder weniger als die hier in Figur 1 gezeigten Portadressen IDY geben. Die Portadressen IDY der Ein-/Ausgangs-Ports PX der einzelnen Netzwerkverteiler, die als End-Ports ausgezeichnet sind, bilden in Figur 1 eine fortlaufende Reihe, die der Masterteilnehmer 105 für jeden Netzwerkverteiler zum Beispiel im Uhrzeigersinn vergeben kann. Der Vorteil der Ausbildung der Portadressen IDY als fortlaufende Reihe bzw. der Vergabe im Uhrzeigersinn ist derjenige, dass dann Routingentscheidungen der Netzwerkverteiler vereinfacht und insbesondere auf der Grundlage von Vergleichsoperatoren und/oder logischen Operatoren getroffen werden können. Auch die Einträge in der Routingtabelle reduzieren sich durch das vereinfachte Routing über Portadressen IDY. Die Vergabe der Portadressen IDY ist jedoch nicht auf das gezeigte und erläuterte Ausführungsbeispiel beschränkt, sondern kann in abweichender Weise umgesetzt sein. Zusätzlich besteht die Möglichkeit, statt Portadressen IDY für die Ein-/Ausgangs-Ports PX der Netzwerkverteiler, die als End-Ports ausgezeichnet sind, MAC-Adressen oder VLAN-IDs zu nutzen und das Routing über die Ein-/Ausgangs-Ports PX der Netzwerkverteiler, die als Weiterleitungs-Ports ausgezeichnet sind, mithilfe von MAC-Adressen oder VLAN-IDs durchzuführen. Auch hierbei können Routingentscheidungen auf der Grundlage von Vergleichsoperatoren und/oder logischen Operatoren von den Netzwerkverteilern durchgeführt werden, sofern die MAC-Adressen oder VLAN-IDs ebenfalls als fortlaufende Reihe vom Masterteilnehmer 105 vergeben werden.

Das in Figur 1 gezeigte Automatisierungsnetzwerk 100 kann als EtherCAT Netzwerk ausgebildet sein und die Datenübertragung zwischen dem Masterteilnehmer 105 und den einzelnen weiteren Netzwerkteilnehmern 800 kann mittels dem echtzeitfähigen EtherCAT Datenübertragungsprotokoll erfolgen. In diesem Zusammenhang stellen die in Figur 1 gezeigten ersten bis fünften Segmente 300 bis 320 EtherCAT Segmente dar.

Ein EtherCAT Netzwerk umfasst in der Regel ein Datenleitungsnetz 200 mit Datenleitungen, die jeweils eine Hinleitung und eine Rückleitung aufweisen. Dies ist aus Übersichtlichkeitsgründen in Figur 1 nicht gezeigt. Ein Netzwerkteilnehmer 800 in einem EtherCAT Netzwerk ist dazu ausgelegt, ein entsperrtes Telegramm auf der Hinleitung zu verarbeiten, also die an den Netzwerkteilnehmer 800 adressierten Ausgangsdaten des entsperrten Telegramms zu lesen und die Eingangsdaten des Netzwerkteilnehmers 800 in das entsperrte Telegramm zu legen. Das Zurücksenden der Telegramme erfolgt in dem EtherCAT Netzwerk über die Rückleitung, wobei die Netzwerkteilnehmer 800 das entsperrte Telegramm über die Rückleitung nicht verarbeiten.

Der erste Netzwerkverteiler 120 sowie der zweite und der dritte Netzwerkverteiler 130, 140 sind nicht auf die in Figur 1 dargestellte Netzwerktopologie beschränkt, sondern können auch in Netzwerken mit abweichenden Netzwerktopologien eingesetzt werden. Ferner sind sie nicht auf ein EtherCAT Netzwerk beschränkt, sondern können ebenso in anderen Netzwerken eingesetzt werden, in denen Netzwerkverteiler zum Routing der Telegramme erforderlich sind und die Netzwerkverteiler auch zum Verarbeiten der Telegramme eingesetzt werden sollen.

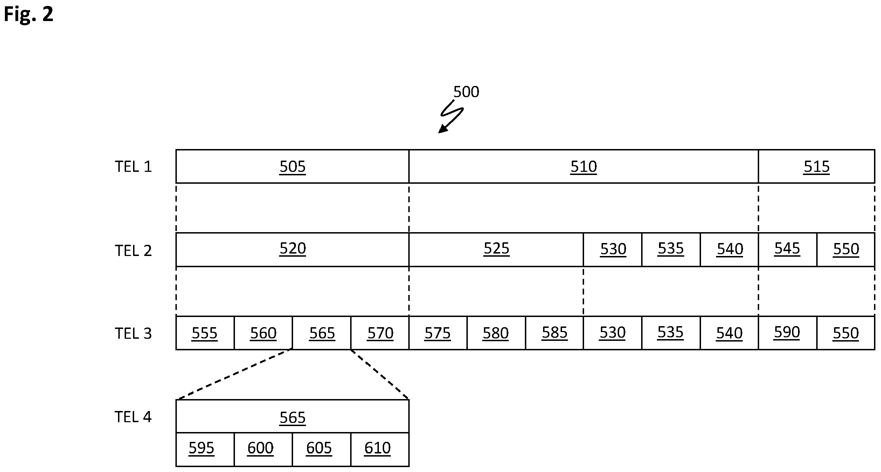

Figur 2 zeigt einen schematischen Aufbau einer Datenstruktur 500, die zu einer Verwendung in dem Verfahren zur Datenübertragung in dem in Figur 1 dargestellten Automatisierungsnetzwerk 100 dient. Die Datenstruktur 500 ist als Telegramm ausgebildet, das beispielsweise vom Masterteilnehmer 105 in Figur 1 an die Netzwerkteilnehmer in dem Automatisierungsnetzwerk 100 zur Verarbeitung für den Steuerungsbetrieb ausgegeben wird. Die Datenstruktur 500 in Figur 2 weist einen ersten Telegrammaufbau TEL1 auf und umfasst einen Kopfabschnitt 505, einen Datenabschnitt 510 sowie einen Endabschnitt 515. Beispielsweise kann die Datenstruktur 500 nach der IEEE-Norm 802.3 ausgebildet sein und das Ethernet Datenframe Format für eine paketorientierte Übertragung der Daten umfassen. Ist für die Datenstruktur 500 zusätzlich zur Einhaltung des Ethernet Datenframe Aufbaus das EtherCAT Datenübertragungsprotokoll für eine Verarbeitung von Nutzdaten der Datenstruktur 500 ausgelegt, so weist die Datenstruktur einen zweiten Telegrammaufbau TEL2 auf. Der Kopfabschnitt 505 der Datenstruktur 500 ist dann als Ethernet Kopfabschnitt 520 ausgebildet.

Der Datenabschnitt 510 der Datenstruktur 500 weist dann einen EtherCAT Kopfabschnitt 525 auf, der Instruktionen für die Netzwerkteilnehmer im Automatisierungsnetzwerk 100 umfasst. Weiterhin umfasst der Datenabschnitt 510 EtherCAT Daten, die in Form von Datagrammen umgesetzt sein können. Beispielsweise kann der Datenabschnitt 510 ein erstes Datagramm 530, ein zweites Datagramm 535 sowie ein n-tes Datagramm 540 aufweisen, wobei das n-te Datagramm 540 anzeigt, dass die Datenstruktur 500 insgesamt eine beliebige Anzahl an Datagrammen umfassen kann. An dieser Stelle soll jedoch keine Einschränkung auf eine bestimmte Anzahl an Datagrammen in der Datenstruktur 500 vorgenommen werden. Die Datagramme selbst weisen jeweils ein Steuerdatenfeld und ein Nutzdatenfeld auf, was in Figur 2 nicht dargestellt ist. Das Steuerdatenfeld umfasst ein Befehlsfeld, welches dem Netzwerkteilnehmer, der als EtherCAT Slaveteilnehmer ausgelegt ist, Auskunft darüber gibt, auf welche Art der Netzwerkteilnehmer die Nutzdaten der als EtherCAT Telegramm ausgebildeten Datenstruktur 500 verarbeiten soll. Also beispielsweise, ob der Netzwerkteilnehmer Daten in einem Schreibvorgang in das Nutzdatenfeld des EtherCAT Telegramms einfügen soll, oder ob der Netzwerkteilnehmer zunächst Daten aus dem Nutzdatenfeld entnehmen und anschließend welche in das Nutzdatenfeld in einem Schreib-/Lesevorgang einfügen soll, bzw. ob der Netzwerkteilnehmer lediglich Daten aus dem Nutzdatenfeld in einem Lesevorgang entnehmen soll. Wird im Folgenden von einem Netzwerteilnehmer gesprochen, so ist damit gleichzeitig ein EtherCAT Slaveteilnehmer mit umfasst. Weiterhin weist das Steuerdatenfeld ein Adressfeld auf. Im Adressfeld ist der Datenbereich im Netzwerkteilnehmer festgelegt, mit dem der Netzwerkteilnehmer beim Durchlauf des Nutzdatenfelds Daten austauschen soll.

Nach dem Empfang des Steuerdatenfelds im Datagramm des EtherCAT-Telegramms beginnt der Netzwerteilnehmer mit der Auswertung des Befehlsfelds und des Adressfelds. Ist der Netzwerkteilnehmer über das Datenelement für die Verarbeitung des EtherCAT Telegramms adressiert, so entnimmt der Netzwerkteilnehmer bei einem Lese- bzw. bei einem Schreib-/Lese-Datagramm die für ihn bestimmten Ausgangsdaten aus dem Nutzdatenfeld während das Datagramm im EtherCAT-Telegramm durch den Netzwerkteilnehmer hindurchläuft. Handelt es sich um ein Schreib- bzw. ein Schreib-/Lese-Datagramm, so fügt der entsprechende Netzwerkteilnehmer die Eingangsdaten im Durchlauf in das Nutzdatenfeld im Datagramm ein.

Der Endabschnitt 515 der als EtherCAT Telegramm ausgebildeten Datenstruktur 500, nachfolgend EtherCAT Telegramm genannt, weist überdies im zweiten Telegrammaufbau TEL2 ein Padding-Feld 545 sowie ein Prüfsummenfeld 550 auf. Das Padding-Feld 545 ist erforderlich, um das EtherCAT Telegramm in dem Ethernet Datenframe auf die notwendige Minimalgröße des Ethernet Datenframes von 64 Byte zu bringen, indem zusätzliche, als Pad angefügte Bytes in das EtherCAT Telegramm eingefügt werden. Das Padding-Feld kann erforderlich sein, wenn mit dem EtherCAT Telegramm als Nutzdaten beispielsweise weniger als 46 bzw. 42 Bytes (ohne bzw. mit einem der IEEE 802.1Q Norm entsprechenden VLAN TAG) zu übertragen sind, wobei eine Präambel und ein Start Frame Delimiter (SFD) Feld, die in Figur 2 nicht enthalten sind, dabei nicht mitgezählt werden. Mithilfe des Prüfsummenfelds kann eine Integritätsprüfung von versendeten Daten gewährleistet werden. Das Prüfsummenfeld kann dazu beispielsweise eine berechnete CRC-Prüfsumme (CRC: Cyclic Redundancy Check) umfassen, die über den Ethernet Datenframe berechnet wird, beginnend mit einer Ziel-MAC-Adresse und endend mit dem Padding-Feld, sodass die Prüfsumme selbst nicht in der CRC-Prüfsumme enthalten ist. Die CRC-Prüfsumme wird vom Sender erstellt und an das Padding-Feld angehängt. Der Empfänger führt nach dem Empfang des EtherCAT Telegramms die gleiche CRC-Prüfsummenberechnung aus, und wenn die vom Empfänger berechnete CRC-Prüfsumme nicht mit der mit dem EtherCAT Telegramm übermittelten CRC-Prüfsumme übereinstimmt, so geht der Empfänger von einer fehlerhaften Datenübertragung aus. Das EtherCAT Telegramm kann in einem solchen Fall vom Empfänger verworfen werden.

Ein dritter Telegrammaufbau TEL3 in Figur 2 zeigt einen detaillierteren Aufbau des Ethernet Kopfabschnitts 520. Der Ethernet Kopfabschnitt 520 weist ein Zieladressfeld 555 auf, welches die oben genannte Ziel-MAC-Adresse umfasst, die den Netzwerkteilnehmer, der als EtherCAT Slaveteilnehmer, Netzwerkverteiler oder als Masterteilnehmer im Automatisierungsnetzwerk 100 nach Figur 1 ausgebildet sein kann, identifiziert, der das EtherCAT Telegramm empfangen soll. Die Ziel-MAC-Adresse kann dabei auch als Multicast-Adresse (Adressierung mehrerer Netzwerkteilnehmer im Automatisierungsnetzwerk 100) oder Broadcast-Adresse (Adressierung aller Netzwerkteilnehmer im Automatisierungsnetzwerk 100) ausgebildet sein. Nachfolgend an das Zieladressfeld 555 weist der Ethernet Kopfabschnitt 520 ein Absenderadressfeld 560 auf. Das Absenderadressfeld 560 umfasst eine Absenderadresse, die ebenfalls als MAC-Adresse ausgebildet ist und den Sender identifiziert. Das Zieladressfeld 555 und das Absenderadressfeld 560 umfassen dabei jeweils 6 Byte.

Ferner weist der Ethernet Kopfabschnitt 520 auf das Absenderadressfeld 560 folgend ein TAG-Feld 565 auf. Dieses kann beispielsweise gemäß der IEEE 802.1Q Norm als VLAN TAG TAG-Feld ausgebildet sein (VLAN: Virtual Local Area Network) und 4 Bytes umfassen. Auf das TAG-Feld 565 folgend weist der Ethernet Kopfabschnitt 520 ein Protokollfeld 570 auf. Das Protokollfeld 570 kann als sogenanntes "Ethertype"-Feld ausgebildet sein und einen Wert umfassen, der ein verwendetes Protokoll einer nächsthöheren Schicht innerhalb von Nutzdaten angibt, wobei eine Schicht und eine nächsthöhere Schicht nach dem OSI-Modell (OSI: Open Systems Interconnection), also dem Referenzmodell für Datenübertragungsprotokolle in einer Schichtenarchitektur, definiert sind. Beispielsweise weist das Protokollfeld 570 den Wert 0x88A4 (im Hexadezimalsystem) auf, wenn das Telegramm als EtherCAT Telegramm ausgebildet ist, da dieser Wert mit dem echtzeitfähigen EtherCAT Datenübertragungsprotokoll verknüpft ist.

Der EtherCAT Kopfabschnitt 525 umfasst ein Längenfeld 575. Das Längenfeld 575 gibt Auskunft über die Länge der EtherCAT Datagramme. Nachfolgend auf das Längenfeld 575 umfasst der EtherCAT Kopfabschnitt 525 ein Reservefeld 580 für einen Bedarfsfall. Anschließend an das Reservefeld 580 umfasst der EtherCAT Kopfabschnitt 525 ein erstes Datenfeld 585, das als ein Typfeld ausgebildet ist. Das erste Datenfeld 585 weist das Datenelement mit dem ersten oder dem zweiten Wert auf, wobei das Datenelement als EtherCAT Protokolltyp ausgebildet ist. Der EtherCAT Protokolltyp umfasst den zweiten Wert, wenn das mit der Telegramm-Kennung angesprochene Segment mit Netzwerkteilnehmern für die Verarbeitung adressiert ist. Der EtherCAT Protokolltyp weist dann den Wert 0x1 (im Hexadezimalsystem) auf und die Netzwerkteilnehmer in dem Segment erkennen an diesem Wert, dass das EtherCAT Telegramm für die Verarbeitung freigegeben ist und beginnen mit der Verarbeitung der Datagramme in dem EtherCAT Telegramm.

Der EtherCAT Protokolltyp weist den ersten Wert auf, der verschieden von dem zweiten Wert mit 0x1 (im Hexadezimalsystem) ausgebildet ist, zum Beispiel kann der erste Wert dem Wert 0x6 (im Hexadezimalsystem) entsprechen, wenn das EtherCAT Telegramm für die Verarbeitung durch die Netzwerkteilnehmer in dem jeweiligen Segment gesperrt ist. Die Portadresse als Kennung des Telegramms kann beispielsweise als MAC-Adresse des Zieladressfelds 555 ausgebildet sein. Ferner kann die Portadresse als Kennung des Telegramms bei Verwendung des TAG-Felds 565, das als VLAN TAG TAG-Feld ausgelegt sein kann, auch als eine VLAN-ID ausgebildet sein. Das VLAN TAG TAG-Feld kann dabei 4 Bytes, also 32 Bits umfassen, wobei die ersten beiden Bytes den Wert 0x8100 umfassen, um den Ethernet Datenframe als einen tagged Ethernet Datenframe nach der IEEE 802.1Q Norm zu kennzeichnen. Die restlichen beiden Bytes umfassen die VLAN-ID, eine Fragmentier-Information, im Falle einer Fragmentierung des EtherCAT Telegramms, sowie eine Priorität, mit der das EtherCAT Telegramm gesendet werden kann, wobei die Priorität in Form eines Prioritäts-Werts ausgebildet sein kann. Auf die einzelnen Datagramme im dritten Telegrammaufbau TEL3 wird an dieser Stelle nicht erneut eingegangen, da diese gleich zu den Datagrammen des zweiten Telegrammaufbaus TEL2 ausgebildet sein können.

Der Endabschnitt 515 kann statt dem Padding-Feld 545 auch ein Fragmentierfeld 590 umfassen, wenn das EtherCAT Telegramm von einem Netzwerkverteiler fragmentiert wird. Das Fragmentierfeld 590 kann den Wert Null umfassen bzw. einen Wahrheitswert Null aufweisen und damit anzeigen, dass keine Fragmentierung des EtherCAT Telegramms stattgefunden hat. Die Bits Null bis drei des Fragmentierfelds 590 können eine Datenframezahl umfassen, die einen Wert angibt, mit dem der jeweilige Ethernet Datenframe gekennzeichnet wird, wobei mit den Bits Null bis Drei die Werte von eins bis 15 darstellbar sind, wenn das EtherCAT Telegramm von einem Netzwerkverteiler fragmentiert worden ist. Die Bits Vier bis Sieben des Fragmentierfelds 590 können als Reserve Bits vorgesehen sein.

Das TAG-Feld 565 kann auch gemäß einem vierten Telegrammaufbau TEL4 aufgebaut sein, wobei in Figur 2 auf eine Darstellung der im dritten Telegrammaufbau TEL3 gezeigten weiteren Felder des Ethernet Kopfabschnitts 520, sowie des EtherCAT Kopfabschnitts 525 und des Endabschnitts 515 nicht gezeigt sind. Gleichwohl kann der vierte Telegrammaufbau TEL4 als vollständiges EtherCAT Telegramm ausgebildet sein. Das TAG-Feld 565 kann nach dem vierten Telegrammaufbau TEL4 zum Beispiel als sogenanntes "ROUT TAG" ausgebildet sein und sich von einem VLAN TAG unterscheiden. Das ROUT TAG umfassende TAG Feld 565 kann ein zweites Datenfeld 595 aufweisen, das als eine TAG-Protokoll-Identifikation zur Kennzeichnung des TAG-Feldes 565 ausgebildet ist. Beispielsweise kann das zweite Datenfeld 595 einen Wert aufweisen, der den Ethernet Datenframe als einen tagged Ethernet Datenframe nach der IEEE 802.1Q Norm kennzeichnet, aber verschieden von der Kennzeichnung des VLAN TAGs mit dem Wert 0x8100 (im Hexadezimalsystem) ausgebildet ist. Hierbei kann das ROUT TAG im zweiten Datenfeld 595 eine separate Kennzeichnung im Hexadezimalsystem aufweisen. Darüber hinaus ist denkbar, dass das ROUT TAG mit dem Wert 0x88A4 (im Hexadezimalsystem), der mit dem echtzeitfähigen EtherCAT Datenübertragungsprotokoll verknüpft ist, und zusätzlich mit einem weiteren Wert, einem sogenannten "Sub-Type" gekennzeichnet ist. Der Sub-Type kann zum Beispiel den Wert 0x7 (im Hexadezimalsystem) aufweisen.

Nachfolgend auf das zweite Datenfeld 595 kann das TAG-Feld 565 ein drittes Datenfeld 600 umfassen. Überdies kann das TAG-Feld 565 zwischen dem dritten Datenfeld 600 und einem fünften Datenfeld 610 ein viertes Datenfeld 605 aufweisen. Das dritte Datenfeld 600 und das vierte Datenfeld 605 können vorzugsweise die Portadressen als Kennung der EtherCAT Telegramme umfassen. In diesem Zusammenhang kann die Portadresse als Kennung für ein EtherCAT Telegramm beispielsweise eine Ziel-Portadresse umfassen (zum Beispiel die erste Portadresse ID1 als Ziel-Portadresse für ein Telegramm, das zurück an den Masterteilnehmer 105 gesendet werden soll), sowie eine Absender-Portadresse (zum Beispiel die siebte Portadresse ID7 als Absender-Portadresse für ein Telegramm, das den Netzwerkteilnehmern des zweiten Segments 305 entstammt), wobei das dritte Datenfeld 600 die Ziel-Portadresse und das vierte Datenfeld 605 die Absender-Portadresse aufweisen kann. Das fünfte Datenfeld 610 kann einen nicht belegten Bereich umfassen, beispielsweise können Bit Null bis Bit Elf des fünften Datenfelds 610 als Reserve-Bits dienen. Ferner kann das fünfte Datenfeld 610 die Fragmentier-Information, wie oben im Zusammenhang mit dem VLAN TAG erläutert wurde, im Falle der Fragmentierung des EtherCAT Telegramms, und die Priorität, mit der das EtherCAT Telegramm gesendet werden kann, umfassen.

Darüber hinaus kann das EtherCAT Telegramm auch in einen UDP/IP (UDP: User Datagram Protocol, IP: Internet Protocol) Datenframe Aufbau eingebettet sein, was in Figur 2 jedoch nicht dargestellt ist. In dem Fall weist der Ethernet Kopfabschnitt 520 das Zieladressfeld 555 sowie das Absenderadressfeld 560 auf. Nachfolgend auf das Absenderadressfeld 560 umfasst der Ethernet Kopfabschnitt 520 das Protokollfeld 570, wobei das Protokollfeld 570 den Wert 0x0800 (im Hexadezimalsystem) aufweist, der das Internetprotokoll (IPv4, Internet Protocol Version 4) angibt. Auf das Protokollfeld 570 folgen im Ethernet Kopfabschnitt 520 ein IP Kopfabschnitt sowie ein UDP Kopfabschnitt. Der EtherCAT Kopfabschnitt 525, die Datagramme und der Endabschnitt 515 können in dem Fall analog zur obigen Erläuterung ausgebildet sein, wobei der Endabschnitt 515 das Padding-Feld 545 sowie das Prüfsummenfeld 550 umfassen kann. Des Weiteren kann das EtherCAT Telegramm zusätzlich zur Einbettung in den UDP/IP Datenframe Aufbau noch das TAG-Feld 565 aufweisen, wobei das TAG-Feld 565 hierbei als VLAN TAG ausgebildet sein kann. Das TAG-Feld 565 ist dann analog zum dritten Telegrammaufbau TEL3 angeordnet. Auch ist denkbar, dass das EtherCAT Telegramm statt dem VLAN TAG das ROUT TAG aufweist.

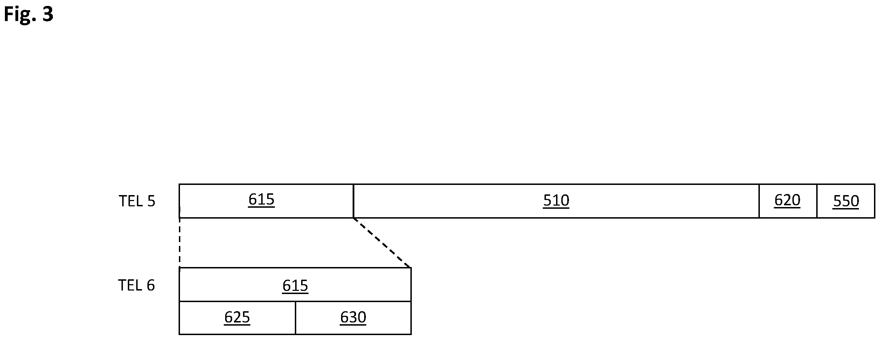

Figur 3 zeigt einen schematischen fünften und sechsten Telegrammaufbau TEL5, TEL6 für die Datenstruktur 500 in Figur 2, die als EtherCAT Telegramm ausgebildet sein kann. Insbesondere kann das EtherCAT Telegramm den fünften Telegrammaufbau TEL5 und den sechsten Telegrammaufbau TEL6 aufweisen, wenn das EtherCAT Telegramm von einem Netzwerkverteiler in dem in Figur 1 dargestellten Automatisierungsnetzwerk 100 fragmentiert worden ist und ein erstes Fragment des fragmentierten EtherCAT Telegramms beispielsweise den dritten und vierten Telegrammaufbau TEL3, TEL4 aufweist. Ein zweites bis n-tes Fragment des EtherCAT Telegramms kann hierbei den fünften und sechsten Telegrammaufbau TEL5, TEL6 umfassen. Das EtherCAT Telegramm weist ein Fragment-Zieladressfeld 615 auf, wobei das Fragment-Zieladressfeld 615 gemäß dem sechsten Telegrammaufbau TEL6 ein siebtes Datenfeld 625 und ein achtes Datenfeld 630 umfasst. Beispielsweise kann das siebte Datenfeld 625 des Fragment-Zieladressfeldes 615 4 Bytes umfassen und in Form eines Multicast-Adressraumes ausgebildet sein, wobei der Multicast-Adressraum Multicast-Adressen aufweist, die zur Adressierung mehrerer Segmente mit Netzwerkteilnehmern in dem in Figur 1 dargestellten Automatisierungsnetzwerk 100 dienen. Alternativ dazu kann der Multicast-Adressraum in Form eines Unicast-Adressraumes ausgebildet sein, wobei der Unicast-Adressraum Unicast-Adressen aufweist, die zur Adressierung eines einzelnen Segments mit Netzwerkteilnehmern in Figur 1 dient. Ferner kann der Multicast-Adressraum auch als Broadcast-Adressraum ausgebildet sein, wobei der Broadcast-Adressraum Broadcast-Adressen umfasst, die zur Adressierung aller Segmente mit Netzwerkteilnehmern in Figur 1 dienen.

Als Alternative zur obigen Beschreibung ist es ebenfalls denkbar, dass das siebte Datenfeld 625 die im Zusammenhang mit dem Zieladressfeld 555 des Ethernet Kopfabschnitts 520 genannte Ziel-MAC-Adresse umfassen kann. Neben der Ziel-MAC-Adresse kann das siebte Datenfeld 625 weiterhin die im Zusammenhang mit dem Absenderadressfeld 560 des Ethernet Kopfabschnitts 520 genannte Absenderadresse, die ebenfalls als MAC-Adresse ausgebildet sein kann, aufweisen.

Das achte Datenfeld 630 des Fragment-Zieladressfeldes 615 kann 2 Bytes umfassen. Die Bits Null bis Drei des achten Datenfelds 630 können die Datenframezahl umfassen, die den Wert des jeweiligen Ethernet Datenframe angeben kann. Die Bits Vier bis Sieben, sowie das Bit Zwölf können weiterhin als Reserve-Bits vorgesehen sein und keine Belegung aufweisen. Die Bits Acht bis Elf können eine Fragmentzahl umfassen, die einen Wert des jeweiligen Fragments angibt, um die einzelnen Fragmente dem zugeordneten Ethernet Datenframe zuordnen zu können. Ferner können die Bits Dreizehn bis Fünfzehn die Priorität aufweisen, mit der das zweite bis n-te Fragment des EtherCAT Telegramms gesendet werden kann, wobei die Priorität in Form eines Prioritäts-Werts ausgebildet sein kann. Der Datenabschnitt 510 im fünften Telegrammaufbau TEL5 ist exemplarisch gewählt worden und kann gemäß des zweiten und dritten Telegrammaufbaus TEL2, TEL3 in Figur 2 ausgebildet sein. Auf den Datenabschnitt 510 folgend kann das zweite bis n-te Fragment des EtherCAT Telegramms ein sechstes Datenfeld 620 umfassen, das ein Byte aufweisen kann. Dabei können die Bits Null bis Drei des sechsten Datenfelds 620 dafür vorgesehen sein, anzuzeigen, ob ein weiteres Fragment folgt, oder ob das zu übertragende Fragment bereits das letzte Fragment des EtherCAT Telegramms bildet.

Beispielsweise kann hierbei mit dem Wert Null angezeigt werden, dass sich das zu übertragende Fragment um das letzte Fragment des EtherCAT Telegramms handelt. Weiterhin können die Bits Vier bis Sechs als Reserve-Bits und das Bit Sieben dafür vorgesehen sein, im Falle eines Unterschreitens der Mindestlänge ein Auffüllen des zweiten bis n-ten Fragments des EtherCAT Telegramms mit Füllbytes, das heißt einem Padding anzuzeigen. Ferner kann das zweite Byte des sechsten Datenfelds 620 die Datenframezahl anzeigen, die den Wert des jeweiligen Ethernet Datenframe angeben kann. Abschließend kann das zweite bis n-te Fragment des EtherCAT Telegramms gemäß dem fünften Telegrammaufbau TEL5 das Prüfsummenfeld 550 mit der über das zweite bis n-te Fragment berechneten Prüfsumme, die analog zu obiger Erläuterung ausgebildet sein kann, umfassen. Da das sechste Datenfeld 620 und das Prüfsummenfeld 550 zusammen 5 Bytes umfassen, kann das Fragment-Zieladressfeld 615 sowie der Datenabschnitt 510 des zweiten bis n-ten Fragments des EtherCAT Telegramms zusammen wenigstens 59 Bytes aufweisen, ohne dass für das zweite bis n-te Fragment des EtherCAT Telegramms ein Padding erforderlich ist, um die Mindestlänge des Ethernet Frames von 64 Bytes zu erreichen.

Darüber hinaus kann das achte Datenfeld 630 auch eine eigene TAG-Protokoll-Identifikation umfassen, so wie sie oben im Zusammenhang mit dem zweiten Datenfeld 595 und dem TAG-Feld 565 erläutert wurde, wenn das achte Datenfeld 630 statt als VLAN TAG zum Beispiel als Fragmentier TAG ausgebildet ist. Die TAG-Protokoll-Identifikation des achten Datenfelds 630 kann einen eigenen Wert im Hexadezimalsystem aufweisen. Des Weiteren ist auch denkbar, dass die TAG-Protokoll-Identifikation den Wert 0x88A4 umfasst, der mit dem echtzeitfähigen EtherCAT Datenübertragungsprotokoll verknüpft ist, und zusätzlich dazu einen weiteren Wert aufweist, den Sub-Type, der zum Beispiel zur Kennzeichnung des Fragment-Zieladressfelds 615 den Wert 0x8 im Hexadezimalsystem umfassen kann.

Die Struktur des EtherCAT Telegramms muss überdies nicht zwingend die Reihenfolge der Netzwerkteilnehmer in den Segmenten beinhalten, da die EtherCAT Telegramme einerseits physikalische Speicheradressen, nachfolgend physikalischer Adressbereich genannt, der Netzwerkteilnehmer in den Segmenten adressieren können und andererseits können die EtherCAT Telegramme auch als logische Telegramme ausgebildet sein. Im zweitgenannten Fall kann dazu im EtherCAT Telegramm eine logische Adresse, also ein logischer Adressbereich angegeben werden und eine Länge des Adressbereichs. Insbesondere kann ein logischer Adressbereich größer als ein physikalischer Adressbereich ausgebildet sein, sodass der physikalische Adressbereich in den logischen Adressbereich gelegt werden kann. Ferner kann der logische Adressbereich im EtherCAT Telegramm hintereinandergelegt werden.

Nachfolgend wird die Fähigkeit zur Verarbeitung des ROUT TAGs von den einzelnen Netzwerteilnehmern in dem Automatisierungsnetzwerk 100 in Figur 1 erläutert. Ist an einem Ein-/Ausgangs-Port eines Netzwerkverteilers, der als ein End-Port ausgezeichnet ist, ein Segment mit Netzwerkteilnehmern angeschlossen, die für die Umsetzung der ersten Datenübertragungsrate ausgelegt sind, also zum Beispiel das vierte Segment 315 sowie das fünfte Segment 320 in Figur 1, so würden die Netzwerkteilnehmer in den genannten Segmenten das in Figur 2 erläuterte ROUT TAG nicht verstehen und folglich ein Telegramm von dem Masterteilnehmer 105 mit dem ROUT TAG nicht verarbeiten können. Neben dem Wert für das EtherCAT Datenübertragungsprotokoll in dem Protokollfeld 570 verstehen die Netzwerkteilnehmer in den oben genannten Segmenten die TAG-Protokoll-Identifikation des zweiten Datenfelds 595, sofern das TAG-Feld 565 als VLAN TAG ausgebildet ist. Dann ist die TAG-Protokoll-Identifikation als VLAN TAG TAG-Protokoll-Identifikation ausgebildet und umfasst den Wert 0x8100 (im Hexadezimalsystem).

Demnach müsste der erste Netzwerkverteiler 120 bzw. der dritte Netzwerkverteiler 140 ein Telegramm mit ROUT TAG vor der Ausgabe an das vierte Segment 315 bzw. das fünfte Segment 320 in ein Telegramm mit VLAN TAG umwandeln. Hierbei wird die Ziel-Portadresse innerhalb eines EtherCAT Segments, also innerhalb der genannten Segmente in Figur 1 nicht benötigt, somit ist eine Umwandlung der Ziel-Portadresse, im Zuge der Umwandlung des ROUT TAGs in ein VLAN TAG, nicht erforderlich. Der Wert der TAG-Protokoll-Identifikation des zweiten Datenfelds 595 wird von dem Wert für das ROUT TAG auf den Wert des VLAN TAGs mit 0x8100 (im Hexadezimalsystem) geändert. Die Absender-Portadresse wird überdies als VLAN-ID gesendet und die Priorität, mit der das EtherCAT Telegramm gesendet werden kann, kann wie oben im Zusammenhang mit dem VLAN TAG erläutert wurde, übernommen werden. Die bisherigen Erläuterungen zur Umwandlung des ROUT TAG in einen VLAN TAG bezogen sich auf den Hinweg eines Telegramms.

Auf dem Rückweg des Telegramms von dem entsprechenden Segment zu dem Masterteilnehmer 105 ändert der jeweilige Netzwerkverteiler den Wert der TAG-Protokoll-Identifikation des zweiten Datenfelds 595 im Telegramm, also den Wert des VLAN TAGs mit 0x8100 (im Hexadezimalsystem) auf den Wert des ROUT TAGs. Zusätzlich übernimmt der jeweilige Netzwerkverteiler die Ziel-Portadresse, die in der Routing-Liste des entsprechenden Netzwerkverteilers entweder als Routingentscheidung mittels Operatoren oder als zugeordneter End-Port hinterlegt ist, die Absender-Portadresse aus der VLAN-ID sowie die Priorität.

Falls die Fragmentier-Information des fünften Datenfelds 610 des ROUT TAGs eine Fragmentierung des Telegramms auf dem Hinweg in dem Automatisierungsnetzwerk 100 mit zwei Masterteilnehmern anzeigt, zum Beispiel über einen Wahrheitswert 1, oder einer alternativen Anzeige, so können die Netzwerkteilnehmer des entsprechenden Segments ein fragmentiertes Telegramm nicht verarbeiten. Das Fragmentierfeld 590 am Ende des Telegramms ist nur vorhanden, wenn die Fragmentier-Information des fünften Datenfelds 610 den Wahrheitswert 1 annimmt. Folglich müssten der erste bis dritte Netzwerkverteiler 120, 130, 140 ein solches Telegramm per Store-and-Forward übertragen, also die Telegramm Fragmente im Netzwerkverteiler speichern und erst das vollständige Telegramm an die jeweiligen Netzwerkteilnehmer in den Segmenten übertragen.

In einem Automatisierungsnetzwerk mit nur einem Masterteilnehmer kann es dagegen auf dem Hinweg eines Telegramms, von dem einzelnen Masterteilnehmer zu dem entsprechenden Segment mit Netzwerkteilnehmern zu keiner Telegramm Kollision kommen, da nur der einzelne Masterteilnehmer ein Telegramm versendet. Folglich kann ein solches Telegramm zum Beispiel mit dem Wahrheitswert 0 keine Fragmentierung des Telegramms anzeigen und mit dieser Information vom Masterteilnehmer versendet werden. Auf dem Rückweg der Telegramme können jedoch auch in einem Automatisierungsnetzwerk mit nur einem Masterteilnehmer Telegramm Kollisionen auftreten, wenn von verschiedenen Segmenten Telegramme von den Netzwerkverteilern über die Ein-/Ausgangs-Ports der Netzwerkverteiler, die als End-Ports ausgezeichnet sind, empfangen werden. Für diese End-Ports kann dann im Falle der Fragmentierung eines Telegramms von einem Netzwerkverteiler eingestellt werden, dass die Fragmentierung im Telegramm mit dem Wahrheitswert 1 für den entsprechenden End-Port von dem Netzwerkverteiler angezeigt wird. Beispielsweise würde im ersten Netzwerkverteiler 120 der vierte Ein-/Ausgangs-Port P3 sowie im dritten Netzwerkverteiler 140 der vierte Ein-/Ausgangs-Port P3 gemäß vorstehender Erläuterung eingestellt werden.

Ist an einem Ein-/Ausgangs-Port eines Netzwerkverteilers in Figur 1, der als End-Port ausgezeichnet ist, ein Segment oder ein Teil eines Segments mit Netzwerkteilnehmern angeschlossen, die zur Datenübertragung mit der zweiten Datenübertragungsrate ausgelegt sind, so können die Netzwerkteilnehmer in einem solchen Segment das ROUT TAG interpretieren, sowie die Fragmentier-Information. Weist die Fragmentier-Information des fünften Datenfelds 610 den Wahrheitswert 1 auf, so umfasst das Telegramm, das heißt das erste Telegramm Fragment, das Fragmentierfeld 590 am Ende des Telegramms. Jedoch würden die Netzwerkteilnehmer eines solchen Segments für ein Telegramm auf dem Rückweg nicht die Ziel-Portadresse und die Absender-Portadresse von dem Telegramm auf dem Hinweg tauschen. Ein als End-Port ausgezeichneter Ein-/Ausgangs-Port eines Netzwerkverteilers muss also dahingehend eingestellt werden, dass der Netzwerkverteiler bei einem Telegramm mit dem zweiten Wert des EtherCAT Protokolltyps, der die Freigabe der Verarbeitung anzeigt, die Ziel-Portadresse und die Absender-Portadresse vor dem Versenden des Telegramms tauscht. Ein Netzwerkverteiler nutzt die Ziel-Portadresse für die Ausgabe bzw. das Routing eines Telegramms über den richtigen Ein-/Ausgangs-Port des Netzwerkverteilers, der als End-Port bzw. als Weiterleitungs-Port ausgezeichnet sein kann, während ein Simple Branch ein Telegramm über die MAC-Adresse routet, wobei ein Simple Branch bei einem Telegramm auf dem Rückweg zum Masterteilnehmer 105 die Absender-Portadresse und die Ziel-Portadresse richtig einstellen kann.

Ein Telegramm, das über die Fragmentier-Information eine Fragmentierung des Telegramms anzeigt und das Fragmentierfeld 590 umfasst, kann von einem Netzwerkteilnehmer, der als Simple Branch ausgelegt ist, verarbeitet werden, jedoch nicht von einem Netzwerkteilnehmer, der als Slaveteilnehmer ausgelegt ist und über keine zusätzliche Routingfunktion verfügt. Über den entsprechenden Ein-/Ausgangs-Port eines Netzwerkverteilers, der als End-Port ausgezeichnet ist, werden von dem Netzwerkverteiler fragmentierte Telegramme also zunächst zwischengespeichert, bis die Telegramm Fragmente eines fragmentierten Telegramms vollständig empfangen worden sind. Erst nach dem vollständigen Empfang sendet der Netzwerkverteiler ein solches Telegramm, das mit dem zweiten Wert des EtherCAT Protokolltyps eine Freigabe der Verarbeitung anzeigt. Ein Telegramm, das als Ethernet Telegramm ausgebildet ist, kann von dem jeweiligen Netzwerkverteiler auch fragmentiert weitergeleitet werden. Darüber hinaus kann noch für den jeweiligen End-Port eines Netzwerkverteilers eingestellt sein, ob bei einem Telegramm auf dem Rückweg, das den zweiten Wert des EtherCAT Protokolltyps aufweist, eine Fragmentierung möglich sein und diese mit der Fragmentier-Information angezeigt werden soll.

In dem erläuterten Beispiel kann der zweite Ein-/Ausgangs-Port P1 des ersten Netzwerkverteilers 120, der als End-Port für das erste Segment 300 ausgezeichnet ist, sowie der fünfte Ein-/Ausgangs-Port P4 des ersten Netzwerkverteilers 120, der als End-Port für das dritte Segment 310 ausgezeichnet ist, gleichermaßen wie der zweite Ein-/Ausgangs-Port P1 des zweiten Netzwerkverteilers 120, der Teil des ersten Segments 300 ist, eingestellt werden.

Sofern an einem Ein-/Ausgangs-Port eines Netzwerkverteilers, der als End-Port ausgezeichnet ist, ein Netzwerkteilnehmer angeschlossen ist, der als Standard-Switch oder als ein Ethernet Teilnehmer ausgebildet ist, so würden diese Netzwerkteilnehmer das ROUT TAG nicht verstehen. Analog zu einem Segment mit Netzwerkteilnehmern, das als EtherCAT Segment in Figur 1 ausgelegt ist, wird auch für ein Telegramm an einen Ethernet Switch oder einen Ethernet Teilnehmer keine Ziel-Portadresse benötigt. Daher wandelt der entsprechende Netzwerkverteiler ein ROUT TAG in ein VLAN TAG um, analog zur obigen Beschreibung, die an der Stelle für die einzelnen Umwandlungsschritte nicht wiederholt wird. Auch im Zusammenhang mit der Möglichkeit der Fragmentierung, deren Anzeige im Telegramm, sowie der Übertragung des Telegramms wird auf die obige Beschreibung zu den Netzwerkteilnehmern eines Segments, die für die erste Datenübertragungsrate ausgelegt sind, verwiesen. Im in Figur 1 dargestellten Automatisierungsnetzwerk 100 würde vom Masterteilnehmer 105 zum Beispiel für den ersten Netzwerkverteiler 120 der siebte Ein-/Ausgangs-Port P6 sowie der achte Ein-/Ausgangs-Port P7 sowie für den dritten Netzwerkverteiler 140 der dritte Ein-/Ausgangs-Port P3 dahingehend konfiguriert werden.

Ist an einem Ein-/Ausgangs-Port eines Netzwerkverteilers in Figur 1, der als End-Port ausgezeichnet ist, ein Masterteilnehmer angeschlossen, so kann der Masterteilnehmer sowohl das ROUT TAG eines Telegramms als auch ein fragmentiertes Telegramm nach obiger Beschreibung interpretieren. Folglich braucht der jeweilige Netzwerkverteiler bei keinem Telegramm auf dem Rückweg zu dem Masterteilnehmer 105 oder dem weiteren Masterteilnehmer 110 eine Umwandlung des ROUT TAGs eines Telegramms vornehmen. Im erläuterten Beispiel betrifft dies den ersten Ein-/Ausgangs-Port P0 sowie den dritten Ein-/Ausgangs-Port P2 des ersten Netzwerkverteilers 120. Diese können vom Masterteilnehmer 105 entsprechend eingestellt werden.

Die Netzwerkverteiler selbst sind ebenfalls in der Lage ein ROUT TAG zu interpretieren.

Alternativ ist denkbar, das Routing in dem in Figur 1 gezeigten Automatisierungsnetzwerk 100 mittels MAC-Adressen durchzuführen. Dabei sind die MAC-Adressen beim Routing als Ziel-MAC-Adressen zu interpretieren. Weiterhin ist denkbar die genannten Varianten zum Routing mittels VLAN-IDs, mittels MAC-Adressen sowie mittels Portadressen IDY im dem Automatisierungsnetzwerk 100 miteinander zu kombinieren. In diesem Zusammenhang ist denkbar, dass ein Netzwerkverteiler Telegramme mit vorhandenem ROUT TAG über die Portadressen IDY, Telegramme mit vorhandenem VLAN TAG über die VLAN-ID oder Telegramme, die weder ROUT TAG noch VLAN TAG aufweisen beziehungsweise Telegramme, die bestimmte Ziel-MAC-Adressen umfassen, über die Ziel-MAC-Adressen routet.

Beispielsweise kann ein Telegramm von dem Masterteilnehmer 105 den in Figur 2 dargestellten dritten Telegrammaufbau TEL3 aufweisen, wobei das TAG-Feld 565 dann in Form eines VLAN TAGs ausgebildet ist. Das VLAN TAG kann vorteilhaft eingesetzt werden, um eine Fragmentierung des Telegramms durch einen Netzwerkverteiler anzuzeigen, auf dem Rückweg des Telegramms von den Netzwerkteilnehmern zu dem Masterteilnehmer 105. Dabei kann die Fragmentier-Information in ein sogenanntes "Dropable Frame Bit" eingetragen werden. Alternativ kann für die Kennzeichnung der Fragmentier-Information auch ein Bit der VLAN-ID genutzt werden. Dies hat jedoch zur Folge, dass sich die Größe der VLAN-ID um 1 Bit verringert und sich die Anzahl der möglichen VLAN-IDs, die für das Routing zur Verfügung stehen, dadurch halbiert. Ein Netzwerkverteiler nach dem Stand der Technik kann bei einem gesetzten Dropable Frame Bit in einem Telegramm bei zu hohem Telegrammverkehr im Automatisierungsnetzwerk 100, auch als "Traffic" bezeichnet, ein solches Telegramm verwerfen. Im Fall der vorliegenden Erfindung soll das Dropable Frame Bit jedoch nicht für eine Anzeige eines möglichen Verwerfens eines Telegramms durch einen Netzwerkverteiler dienen, sondern kann, aufgrund der freien Belegung beispielsweise zur Anzeige der Fragmentier-Information verwendet werden, sofern ein Telegramm fragmentiert werden kann oder fragmentiert worden ist. Das Fragmentierfeld 590 am Ende des Telegramms ist nur vorhanden, sofern die Fragmentier-Information beispielsweise mit einem Wahrheitswert in Form einer 1 eine Fragmentierung des Telegramms anzeigt.

Beim Routing mittels MAC-Adressen haben der Masterteilnehmer 105, der weitere Masterteilnehmer 110, der zwölfte Netzwerkteilnehmer 400, der dreizehnte Netzwerkteilnehmer 405, der vierzehnte Netzwerkteilnehmer 410, die jeweils als Ethernet Teilnehmer bzw. als Ethernet Switch ausgebildet sind, sowie der dritte Netzwerkteilnehmer 135, der vierte Netzwerkteilnehmer 145, der sechste Netzwerkteilnehmer 160 und der zehnte Netzwerkteilnehmer 180, die jeweils als Simple Branch ausgelegt sind, eine eigene MAC-Adresse. Zusätzlich kann der Masterteilnehmer 105 in der Konfigurationsphase des Automatisierungsnetzwerks 100 den einzelnen Ein-/Ausgangs-Ports PX der Netzwerkverteiler, an die über das Datenleitungsnetz 200 die in Figur 1 dargestellten Segmente mit Netzwerkteilnehmern angeschlossen sind, jeweils eine MAC-Adresse zuweisen, als sogenannte "Stellvertreter" MAC-Adresse. Dies können also insbesondere der zweite Ein-/Ausgangs-Port P1, der vierte Ein-/Ausgangs-Port P3 und der fünfte Ein-/Ausgangs-Port P4 des ersten Netzwerkverteilers 120 sowie der dritte Ein-/Ausgangs-Port P2 des zweiten Netzwerkverteilers 130 und der vierte Ein-/Ausgangs-Port P3 des dritten Netzwerkverteilers 140 sein.

Sind an einem Ein-/Ausgangs-Port PX eines Netzwerkverteilers ein oder mehrere Netzwerkteilnehmer 800 angeschlossen, die für die erste Datenübertragungsrate ausgelegt sind, also zum Beispiel das vierte Segment 315 mit dem ersten Netzwerkteilnehmer 115 über den vierten Ein-/Ausgangs-Port P3 des ersten Netzwerkverteilers 120 sowie das fünfte Segment 320 mit dem elften Netzwerkteilnehmer 185 über den vierten Ein-/Ausgangs-Port P3 des dritten Netzwerkverteilers 140, so verstehen die Netzwerkteilnehmer neben dem Wert für das EtherCAT Datenübertragungsprotokoll in dem Protokollfeld 570 auch die TAG-Protokoll-Identifikation des zweiten Datenfelds 595, sofern das TAG-Feld 565 als VLAN TAG ausgebildet ist. Dann ist die TAG-Protokoll-Identifikation als VLAN TAG TAG-Protokoll-Identifikation ausgebildet und umfasst den Wert 0x8100 (im Hexadezimalsystem). Demnach kann der entsprechende Netzwerkverteiler des Automatisierungsnetzwerks 100 ein Telegramm mit VLAN TAG an die oben genannten Segmente mit Netzwerkteilnehmern versenden. Für die Fragmentierung, deren Anzeige im Telegramm, sowie für die Einstellung der entsprechenden Ein-/Ausgangs-Ports gilt obige Erläuterung im Zusammenhang mit dem Routing mittels ROUT TAG und Portadressen zu den gleichen Netzwerkteilnehmern mit Ein-/Ausgangs-Ports und daran angeschlossenen Segmenten mit Netzwerkteilnehmern, sodass an dieser Stelle auf eine Wiederholung der Merkmale verzichtet wird.

Sofern an einem Ein-/Ausgangs-Port PX eines Netzwerkverteilers ein oder mehrere Netzwerkteilnehmer 800 angeschlossen sind, die für die Datenübertragung mit der zweiten Datenübertragungsrate ausgebildet sind, also zum Beispiel das erste Segment 300, das über den zweiten Ein-/Ausgangs-Port P1 des ersten Netzwerkverteilers 120 angeschlossen ist, sowie das dritte Segment 310, das über den fünften Ein-/Ausgangs-Port P4 des ersten Netzwerkverteilers 120 angeschlossen ist, gleichermaßen wie das zweite Segment 305, das über den dritten Ein-/Ausgangs-Port P2 des zweiten Netzwerkverteilers 130 angeschlossen ist. Ein Telegramm, das über die Fragmentier-Information eine Fragmentierung des Telegramms anzeigt und das Fragmentierfeld 590 umfasst, kann von einem Netzwerkteilnehmer, der als Simple Branch ausgelegt ist, verarbeitet werden, jedoch nicht von einem Netzwerkteilnehmer, der als Slaveteilnehmer ausgelegt ist und über keine zusätzliche Routingfunktion verfügt. Für den Ein-/Ausgangs-Port eines Netzwerkverteilers, über den das entsprechende Segment angeschlossen ist, muss also je MAC-Adresse, die über diesem Port geroutet werden soll, konfiguriert werden können, ob fragmentierbare Telegramme möglich sind oder per Store-and-Forward, das heißt erst nach dem vollständigen Empfang der Telegramm Fragmente, übertragen werden müssen. Zur Anzeige der Fragmentierung und zur Einstellung der Ein-/Ausgangs-Ports wird auf die vorstehende Erläuterung zu selbigen Ein-/Ausgangs-Ports und Segmenten mit Netzwerkteilnehmern verwiesen, wie sie im Zusammenhang mit dem Routing mittels ROUT TAG und Portadressen beschrieben wurde.

Wenn an einem Ein-/Ausgangs-Port PX eines Netzwerkverteilers in Figur 1 Netzwerkteilnehmer 800 angeschlossen sind, die als Ethernet Teilnehmer oder als Ethernet Switch ausgebildet sind, wie beispielsweise der zwölfte Netzwerkteilnehmer 400 über den achten Ein-/Ausgangs-Port P7 des ersten Netzwerkverteilers 120 und der dreizehnte Netzwerkteilnehmer 405 über den siebten Ein-/Ausgangs-Port P6 des ersten Netzwerkverteilers 120 sowie der vierzehnte Netzwerkteilnehmer 410 über den dritten Ein-/Ausgangs-Port P2 des dritten Netzwerkverteilers 140, so können die genannten Teilnehmer ein fragmentiertes Telegramm nicht verarbeiten. Zur Anzeige der Fragmentierung und der Einstellung diesbezüglich und der jeweiligen Ein-/Ausgangs-Port, wird auf die Erläuterung der als Ethernet Teilnehmer ausgebildeten Netzwerkteilnehmer im Zusammenhang mit dem ROUT TAG und dem Routing mittels Portadressen verwiesen.

Ist an einem Ein-/Ausgangs-Port PX eines Netzwerkverteilers ein Masterteilnehmer angeschlossen, zum Beispiel der Masterteilnehmer 105 über den ersten Ein-/Ausgangs-Port P0 und der weitere Masterteilnehmer 110 über den dritten Ein-/Ausgangs-Port P2 des ersten Netzwerkverteilers 120, so kann der Masterteilnehmer ein VLAN TAG im Telegramm interpretieren. Folglich muss von dem jeweiligen Netzwerkverteiler vor der Ausgabe des Telegramms keine Umwandlung des VLAN TAGs erfolgen. Auch die Fragmentierung eines Telegramms kann von einem Masterteilnehmer unterstützt werden. Für die Einstellung der genannten Ein-/Ausgangs-Ports wird auf obige Erläuterung zum ROUT TAG in Bezug auf den Masterteilnehmer verwiesen.

Ferner ist als weitere Alternative zum Routing mittels MAC-Adressen in dem in Figur 1 gezeigten Automatisierungsnetzwerk 100 auch ein Routing mittels VLAN-IDs denkbar, sofern das Automatisierungsnetzwerk 100 in logische Teilnetze, also VLANs unterteilt ist. Beim Routing mittels VLAN-IDs wird jeder möglichen Kommunikationsbeziehung des Automatisierungsnetzwerks 100 von dem Masterteilnehmer 105 in der Konfigurationsphase des Automatisierungsnetzwerks 100 eine VLAN-ID zugeordnet. Die einzelnen Kommunikationsbeziehungen sind in der Tabelle TAB aufgeführt:

| VLAN - ID | Kommunikationsbeziehung |
|---|---|
| 1 | Masterteilnehmer 105 <-> erstes Segment 300 |
| 2 | Masterteilnehmer 105 <-> zweites Segment 305 |
| 3 | Masterteilnehmer 105 <-> fünftes Segment 320 |
| 4 | Masterteilnehmer 105 <-> viertes Segment 315 |
| 5 | Masterteilnehmer 105 <-> drittes Segment 310 |
| 6 | Masterteilnehmer 105 <-> zwölfter Netzwerkteilnehmer 400 |
| 7 | Masterteilnehmer 105 <-> dreizehnte Netzwerkteilnehmer 405 |
| 8 | Masterteilnehmer 105 <-> vierzehnte Netzwerkteilnehmer 410 |
| 9 | Masterteilnehmer 105 <-> vierzehnte Netzwerkteilnehmer 410 |
| 10 | Masterteilnehmer 105 <-> weiterer Masterteilnehmer 110 |
| 11 | weiterer Masterteilnehmer 110 <-> erstes Segment 300 |
| 12 | weiterer Masterteilnehmer 110 <-> zweites Segment 305 |
| 13 | weiterer Masterteilnehmer 110 <-> fünftes Segment 320 |
| 14 | weiterer Masterteilnehmer 110 <-> viertes Segment 315 |
| 15 | weiterer Masterteilnehmer 110 <-> drittes Segment 310 |
| 16 | weiterer Masterteilnehmer 110 <-> zwölfter Netzwerkteilnehmer 400 |
| 17 | weiterer Masterteilnehmer 110 <-> dreizehnter Netzwerkteilnehmer 405 |
| 18 | weiterer Masterteilnehmer 110 <-> vierzehnter Netzwerkteilnehmer 410 |
| 19 | weiterer Masterteilnehmer 110 <-> vierzehnter Netzwerkteilnehmer 410 |
| 21 | Masterteilnehmer 105 <-> sechster Netzwerkteilnehmer 160 |
| 22 | Masterteilnehmer 105 <-> zehnter Netzwerkteilnehmer 180 |
| 23 | Masterteilnehmer 105 <-> dritter Netzwerkteilnehmer 135 |
| 24 | Masterteilnehmer 105 <-> vierter Netzwerkteilnehmer 145 |
| 31 | weiterer Masterteilnehmer 110 <-> sechster Netzwerkteilnehmer 160 |
| 32 | weiterer Masterteilnehmer 110 <-> zehnter Netzwerkteilnehmer 180 |
| 33 | weiterer Masterteilnehmer 110 <-> dritter Netzwerkteilnehmer 135 |
| 34 | weiterer Masterteilnehmer 110 <-> vierter Netzwerkteilnehmer 145 |
| 41 | vierzehnter Netzwerkteilnehmer 410 <-> sechster Netzwerkteilnehmer 160 |
| 42 | vierzehnter Netzwerkteilnehmer 410 <-> zehnter Netzwerkteilnehmer 180 |
| 43 | vierzehnter Netzwerkteilnehmer 410 <-> dritter Netzwerkteilnehmer 135 |
| 44 | vierzehnter Netzwerkteilnehmer 410 <-> vierter Netzwerkteilnehmer 145 |
| 50 | vierzehnter Netzwerkteilnehmer 410 <-> dreizehnter Netzwerkteilnehmer 405 |

| | |
|---|---|
| TAB | |

Die Vergabe der VLAN-IDs erfolgte exemplarisch und kann auch davon abweichend umgesetzt werden. Mit dem Symbol <-> in der Tabelle TAB wird angedeutet, dass die Kommunikationsbeziehung sowohl von dem ersten Teilnehmer zu dem zweiten Teilnehmer ausgehen kann, als auch von dem zweiten Teilnehmer zu dem ersten Teilnehmer der jeweiligen Kommunikationsbeziehung.

In der Konfigurationsphase wird jedem Ein-/Ausgangs-Port eines Netzwerkverteilers eine Liste der VLAN-IDs, die auf den einzelnen Ein-/Ausgangs-Port empfangen werden dürfen, sowie dem Ein-/Ausgangs-Port, über den ein Telegramm geroutet werden soll, zugeteilt. Die VLAN-ID wird dabei im VLAN TAG, gemäß der obigen Erläuterung zu den einzelnen Telegrammaufbauten, im Telegramm übertragen. Für den Eintrag der Fragmentier-Information wird auf die obige Beschreibung zum "Dropable Frame Bit" bezüglich des Routings über MAC-Adressen verwiesen. Auch im Zusammenhang mit dem Routing über MAC-Adressen können die Ein-/Ausgangs-Ports der Netzwerkverteiler in dem Automatisierungsnetzwerk unterteilt werden in ausgezeichnete End-Ports, an denen Segmente mit Netzwerkteilnehmern angeschlossen sind und ausgezeichnete Weiterleitungs-Ports, über die weitere Netzwerkverteiler und Netzwerkteilnehmer angeschlossen sein können. Beispielsweise können der zweite Ein-/Ausgangs-Port P1 des ersten Netzwerkverteilers 120, der erste Ein-/Ausgangs-Port P0 des zweiten Netzwerkverteilers 130 und der dritte Ein-/Ausgangs-Port P2 des zweiten Netzwerkverteilers 130 sowie der erste Ein-/Ausgangs-Port P0 des dritten Netzwerkverteilers 140 als Weiterleitungs-Ports ausgezeichnet sein.

Sind an einem als End-Port ausgezeichneten Ein-/Ausgangs-Port PX eines Netzwerkverteilers ein oder mehrere Netzwerkteilnehmer 800 angeschlossen, die zur Umsetzung der ersten Datenübertragungsrate ausgelegt sind, beispielsweise das vierte Segment 315 mit dem ersten Netzwerkteilnehmer 115 über den vierten Ein-/Ausgangs-Port P3 des ersten Netzwerkverteilers 120 sowie das fünfte Segment 320 mit dem elften Netzwerkteilnehmer 185 über den vierten Ein-/Ausgangs-Port P3 des dritten Netzwerkverteilers 140, so können diese Teilnehmer das VLAN TAG interpretieren, sodass das VLAN TAG von dem entsprechenden Netzwerkverteiler ohne Umwandlung übertragen werden kann. Für die Möglichkeit der Fragmentierung sowie deren Anzeige und die Einstellung der Ein-/Ausgangs-Ports der Netzwerkverteiler wird auf vorstehende Erläuterungen zum Routing über Portadressen und MAC-Adressen für die zugehörigen Netzwerkteilnehmer verwiesen.

Sofern an einem Ein-/Ausgangs-Port PX eines Netzwerkverteilers in Figur 1 ein oder mehrere Netzwerkteilnehmer 800 angeschlossen sind, die zur Umsetzung der zweiten Datenübertragungsrate ausgebildet sind, so können auch diese Teilnehmer das VLAN TAG interpretieren und der entsprechende Netzwerkverteiler kann das VLAN TAG ohne Umwandlung im Telegramm übertragen. Als Beispiel kann hierbei das erste Segment 300, das über den zweiten Ein-/Ausgangs-Port P1 des ersten Netzwerkverteilers 120 angeschlossen ist, sowie das dritte Segment 310, das über den fünften Ein-/Ausgangs-Port P4 des ersten Netzwerkverteilers 120 angeschlossen ist, gleichermaßen wie das zweite Segment 305, das über den dritten Ein-/Ausgangs-Port P2 des zweiten Netzwerkverteilers 130 angeschlossen ist, dienen. Für die übrigen Merkmale gilt die obige Ausführung zu den gleichen Teilnehmern für das Routing über MAC-Adressen. Die Einstellung muss hierbei für jede zu routende VLAN-ID über die einzelnen Ein-/Ausgangs-Ports PX der Netzwerkverteiler erfolgen.

Wenn an einem als End-Port ausgezeichneten Ein-/Ausgangs-Port PX eines Netzwerkverteilers ein Netzwerkteilnehmer 800 angeschlossen ist, der als Ethernet Teilnehmer oder als Ethernet Switch ausgebildet ist, wie zum Beispiel der zwölfte bis vierzehnte Netzwerkteilnehmer 400, 405, 410, unterstützen diese die Fragmentierung eines Telegramms nicht, sodass die Telegramm Fragmente vollständig von dem jeweiligen Netzwerkverteiler empfangen werden müssen, bevor sie der Netzwerkverteiler an die Teilnehmer ausgibt. Für die Anzeige der Fragmentierung und der Einstellung der Ein-/Ausgangs-Ports wird ebenfalls auf die obige Erläuterung zu den gleichen Netzwerkteilnehmern im Rahmen des Routings über MAC-Adressen verwiesen.

Ist schließlich an einem als End-Port ausgezeichneten Ein-/Ausgangs-Port PX eines Netzwerkverteilers ein Masterteilnehmer angeschlossen, zum Beispiel der Masterteilnehmer 105 über den ersten Ein-/Ausgangs-Port P0 sowie der weitere Masterteilnehmer 110 über den dritten Ein-/Ausgangs-Port P2 des ersten Netzwerkverteilers 120, so unterstützen diese sowohl das erläuterte Fragmentierverfahren als auch die Ausbildung eines Telegramms mit einem VLAN TAG. Insofern hat keine Umwandlung des VLAN TAGs zu erfolgen. Die Einstellung der Ein-/Ausgangs-Ports der Netzwerkverteiler bezieht sich auf die genannten Ein-/Ausgangs-Ports des ersten Netzwerkverteilers 120.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung gemäß den beigefügten Ansprüchen zu verlassen.

### Bezugszeichenliste

- 100: Automatisierungsnetzwerk

- 105: Masterteilnehmer
- 110: weiterer Masterteilnehmer

- 800: Netzwerkteilnehmer

- 115: erster Netzwerkteilnehmer
- 125: zweiter Netzwerkteilnehmer
- 135: dritter Netzwerkteilnehmer
- 145: vierter Netzwerkteilnehmer
- 155: fünfter Netzwerkteilnehmer
- 160: sechster Netzwerkteilnehmer
- 165: siebter Netzwerkteilnehmer
- 170: achter Netzwerkteilnehmer
- 175: neunter Netzwerkteilnehmer
- 180: zehnter Netzwerkteilnehmer
- 185: elfter Netzwerkteilnehmer

- 120: erster Netzwerkverteiler
- 130: zweiter Netzwerkverteiler
- 140: dritter Netzwerkverteiler

- 400: zwölfter Netzwerkteilnehmer
- 405: dreizehnter Netzwerkteilnehmer
- 410: vierzehnter Netzwerkteilnehmer

- 200: Datenleitungsnetz
- 205: erste Datenleitung
- 210: zweite Datenleitung
- 215: dritte Datenleitung
- 220: vierte Datenleitung
- 225: fünfte Datenleitung
- 230: sechste Datenleitung
- 235: siebte Datenleitung
- 240: achte Datenleitung
- 245: neunte Datenleitung
- 250: zehnte Datenleitung
- 255: elfte Datenleitung
- 260: zwölfte Datenleitung

- PX: Ein-/Ausgangs-Ports

- P0: erster Ein-/Ausgangs-Port
- P1: zweiter Ein-/Ausgangs-Port
- P2: dritter Ein-/Ausgangs-Port
- P3: vierter Ein-/Ausgangs-Port
- P4: fünfter Ein-/Ausgangs-Port
- P5: sechster Ein-/Ausgangs-Port
- P6: siebter Ein-/Ausgangs-Port
- P7: achter Ein-/Ausgangs-Port

- IDY: Portadresse

- ID1: erste Portadresse
- ID2: zweite Portadresse
- ID3: dritte Portadresse
- ID4: vierte Portadresse
- ID5: fünfte Portadresse
- ID6: sechste Portadresse
- ID7: siebte Portadresse
- ID8: achte Portadresse
- ID9: neunte Portadresse
- ID10: zehnte Portadresse

- 300: erstes Segment
- 305: zweites Segment
- 310: drittes Segment
- 315: viertes Segment
- 320: fünftes Segment

- 500: Datenstruktur
- 505: Kopfabschnitt
- 510: Datenabschnitt
- 515: Endabschnitt
- 520: Ethernet Kopfabschnitt
- 525: EtherCAT Kopfabschnitt
- 530: erstes Datagramm
- 535: zweites Datagramm
- 540: n-tes Datagramm
- 545: Padding-Feld
- 550: Prüfsummenfeld
- 555: Zieladressfeld
- 560: Absenderadressfeld
- 565: TAG-Feld
- 570: Protokollfeld
- 575: Längenfeld
- 580: Reservefeld
- 585: erstes Datenfeld
- 590: Fragmentierfeld
- 595: zweites Datenfeld
- 600: drittes Datenfeld
- 605: viertes Datenfeld
- 610: fünftes Datenfeld
- 615: Fragment-Zieladressfeld
- 620: sechstes Datenfeld
- 625: siebtes Datenfeld
- 630: achtes Datenfeld

- TEL1: erster Telegrammaufbau
- TEL2: zweiter Telegrammaufbau
- TEL3: dritter Telegrammaufbau
- TEL4: vierter Telegrammaufbau
- TEL5: fünfter Telegrammaufbau
- TEL6: sechster Telegrammaufbau

- TAB: Tabelle

## Patentansprüche

1. Verfahren zum Routen von Telegrammen in einem Automatisierungsnetzwerk (100),
wobei das Automatisierungsnetzwerk (100) Netzwerkteilnehmer (800) umfasst, die über ein Datenleitungsnetz (200) miteinander verbunden sind,
wobei wenigstens ein Netzwerkteilnehmer (800) als Masterteilnehmer (105, 110) ausgebildet ist und Telegramme über das Datenleitungsnetz (200) an die Netzwerkteilnehmer (800) versendet,
wobei wenigstens ein Netzwerkteilnehmer (800) als Netzwerkverteiler (120, 130, 140) ausgebildet ist, der mehrere Ein-/Ausgangs-Ports (PX) aufweist, wobei die Ein-/Ausgangs-Ports (PX), an die jeweils Segmente (300, 305, 310, 315, 320) mit weiteren Netzwerkteilnehmern (800) angeschlossen sind, als End-Ports ausgezeichnet sind, wobei an die End-Ports des Netzwerkverteilers (120, 130, 140) Segmente (300, 305, 310, 315, 320) mit weiteren Netzwerkteilnehmern (800) über das Datenleitungsnetz (200) angeschlossen sind,
**dadurch gekennzeichnet, dass** der Masterteilnehmer (105) den End-Ports jeweils eine Portadresse (IDY) zuweist,
wobei der Masterteilnehmer (105) einem Telegramm, das für ein Segment (300, 305, 310, 315, 320) mit weiteren Netzwerkteilnehmern (800) zur Verarbeitung bestimmt ist, als Kennung die Portadresse (IDY) des End-Ports, an dem das Segment (300, 305, 310, 315, 320) mit weiteren Netzwerkteilnehmern (800) angeschlossen ist, zuweist, und
wobei, wenn der Netzwerkverteiler (120, 130, 140) ein Telegramm mit einer Portadresse (IDY) eines End-Ports des Netzwerkverteilers (120, 130, 140) als Kennung empfängt, der Netzwerkverteiler (120, 130, 140) das Telegramm direkt über den Ein-/Ausgangs-Port (PX) des Netzwerkverteilers (120, 130, 140) ausgibt, der dem End-Port der Portadresse (IDY) entspricht,
wobei die Portadressen (IDY) der End-Ports des Netzwerkverteilers (120, 130, 140) als fortlaufende Reihe ausgebildet sind,
wobei der Netzwerkverteiler (120, 130, 140) auf der Grundlage von Operatoren aus einer Menge der fortlaufenden Reihe eine Teilmenge der fortlaufenden Reihe für das Routing der Telegramme mit Portadressen als Kennungen selektieren kann, und
wobei die Operatoren als Vergleichsoperatoren und/oder als logische Operatoren ausgebildet sind.

2. Verfahren nach Anspruch 1,
wobei der Netzwerkverteiler (120, 130, 140) Ein-/Ausgangs-Ports (PX) umfasst, die als Weiterleitungs-Ports ausgezeichnet sind,
wobei an die Weiterleitungs-Ports zusätzlich zu Netzwerkteilnehmern (800) weitere Netzwerkverteiler (120, 130, 140) über das Datenleitungsnetz (200) angeschlossen sind, wobei, wenn der Netzwerkverteiler (120, 130, 140) ein Telegramm mit einer Kennung empfängt, die nicht einer Portadresse (IDY) eines End-Ports des Netzwerkverteilers (120, 130, 140) entspricht, der Netzwerkverteiler (120, 130, 140) das Telegramm über einen in einer Routingtabelle hinterlegten Weiterleitungs-Port des Netzwerkverteilers (120, 130, 140) routet.

3. Verfahren nach Anspruch 2,
wobei der Weiterleitungs-Port gleichzeitig als End-Port ausgezeichnet ist,
wobei der Masterteilnehmer (105, 110) ausgelegt ist, Telegramme, die für eine Verarbeitung durch die Netzwerkteilnehmer (800) gesperrt sind und dazu jeweils einen ersten Wert eines Datenelements eines ersten Datenfelds (585) im Telegramm aufweisen, über das Datenleitungsnetz (200) zu versenden,
und
wobei, wenn der Netzwerkverteiler (120, 130, 140) ein Telegramm mit einer Portadresse (IDY) als Kennung vom Masterteilnehmer (105, 110) empfängt, das für einen End-Port des Netzwerkverteilers (120, 130, 140) bestimmt ist und für die Verarbeitung durch die Netzwerkteilnehmer (800) gesperrt ist, der Netzwerkverteiler (120, 130, 140) das Telegramm mit der Portadresse (IDY) als Kennung entsperrt und über den entsprechenden Ein-/Ausgangs-Port (PX), der dem End-Port der Portadresse (IDY) zugeordnet ist, an das Segment (300, 305, 310, 315, 320) mit weiteren Netzwerkteilnehmern (800) zur Verarbeitung ausgibt,
wobei zur Entsperrung des Telegramms mit der Portadresse (IDY) als Kennung, der erste Wert des Datenelements mit einem zweiten Wert des Datenelements durch den Netzwerkverteiler (120, 130, 140) überschrieben wird,
wobei der zweite Wert des Datenelements des ersten Datenfelds (585) im Telegramm eine Freigabe der Verarbeitung des Telegramms für die Netzwerkteilnehmer (800) anzeigt.

4. Verfahren nach einem der Ansprüche 1 bis 3,
wobei der Masterteilnehmer (105, 110) zur Erfassung der Ein-/Ausgangs-Ports (PX) des Netzwerkverteilers (120, 130, 140) Abfragetelegramme über das Datenleitungsnetz (200) versendet, und
wobei der Masterteilnehmer (105, 110) nach dem Erhalt eines Abfragetelegramms von dem Netzwerkverteiler (120, 130, 140) mit einer Port-Information über die Ein-/Ausgangs-Ports (PX) des Netzwerkverteilers (120, 130, 140), an die jeweils Segmente (300, 305, 310, 315, 320) mit weiteren Netzwerkteilnehmern (800) angeschlossen sind und als End-Ports ausgebildet sind, die Portadresse (IDY) zuordnet.

5. Datenstruktur (500) zur Verwendung in einem Verfahren nach einem der Ansprüche 1 bis 4,
wobei die Datenstruktur (500) als Telegramm ausgebildet ist, und das Telegramm einen Kopfabschnitt (505), einen Datenabschnitt (510) und einen Endabschnitt (515) aufweist, wobei der Kopfabschnitt (505) die Portadresse (IDY) als Kennung umfasst,
wobei der Datenabschnitt (510) ein erstes Datenfeld (585) mit einem Datenelement mit einem ersten oder zweiten Wert aufweist, und
wobei der Endabschnitt (515) ein Prüfsummenfeld (550) für eine Integritätsprüfung von versendeten Daten umfasst,
**dadurch gekennzeichnet, dass** das Datenelement den ersten Wert aufweist, wenn das Telegramm für die Verarbeitung durch die Netzwerkteilnehmer (800) gesperrt ist und das Datenelement den zweiten Wert aufweist, wenn das Telegramm für die Verarbeitung durch die Netzwerkteilnehmer (800) entsperrt ist.

6. Datenstruktur (500) nach Anspruch 5,
wobei das Telegramm als EtherCAT Telegramm ausgebildet ist, wobei das EtherCAT Telegramm im Kopfabschnitt (505) ein TAG-Feld (565) umfasst, das ein zweites Datenfeld (595), drittes Datenfeld (600), viertes Datenfeld (605) und fünftes Datenfeld (610) aufweist,
wobei das zweite Datenfeld (595) des TAG-Feldes (565) eine TAG-Protokoll-Identifikation zur Kennzeichnung des TAG-Feldes (565) im Kopfabschnitt (505) des EtherCAT Telegramms umfasst,
wobei das dritte und vierte Datenfeld (600, 605) des TAG-Feldes (565) die als Kennung ausgebildete Portadresse (IDY) des EtherCAT Telegramms umfasst, die eine Zielkennung und eine Absenderkennung aufweist,
wobei das fünfte Datenfeld (610) eine Fragmentier-Information umfasst, sofern das Telegramm fragmentiert wird,
wobei der Datenabschnitt (510) einen weiteren Kopfabschnitt (525) umfasst, der ein Längenfeld (575), ein Reservefeld (580) und das erste Datenfeld (585) aufweist,
wobei das erste Datenfeld (585) als Typfeld und das Datenelement als EtherCAT Protokolltyp ausgebildet sind, und
wobei, wenn das EtherCAT Telegramm für die Verarbeitung durch die Netzwerkteilnehmer (800) gesperrt ist, der EtherCAT Protokolltyp den ersten Wert aufweist,
wobei, wenn das EtherCAT Telegramm für die Verarbeitung durch die Netzwerkteilnehmer (800) entsperrt ist, der EtherCAT Protokolltyp den zweiten Wert umfasst.

7. Automatisierungsnetzwerk (100), das Netzwerkteilnehmer (800) umfasst, die über ein Datenleitungsnetz (200) miteinander verbunden sind,
wobei wenigstens ein Netzwerkteilnehmer (800) als Masterteilnehmer (105, 110) ausgebildet ist, der ausgelegt ist, Telegramme über das Datenleitungsnetz (200) an die Netzwerkteilnehmer (800) zu versenden,
wobei wenigstens ein Netzwerkteilnehmer (800) als Netzwerkverteiler (120, 130, 140) ausgebildet ist, der mehrere Ein-/Ausgangs-Ports (PX) aufweist, wobei die Ein-/Ausgangs-Ports (PX), an die jeweils Segmente (300, 305, 310, 315, 320) mit weiteren Netzwerkteilnehmern (800) angeschlossen sind, als End-Ports ausgezeichnet sind, wobei an die End-Ports des Netzwerkverteilers (120, 130, 140) Segmente (300, 305, 310, 315, 320) mit weiteren Netzwerkteilnehmern (800) über das Datenleitungsnetz (200) angeschlossen sind,
**dadurch gekennzeichnet, dass** der Masterteilnehmer (105) ausgebildet ist, den End-Ports jeweils eine Portadresse (IDY) zuzuweisen,
wobei der Masterteilnehmer (105) ausgelegt ist, einem Telegramm, das für ein Segment (300, 305, 310, 315, 320) mit weiteren Netzwerkteilnehmern (800) zur Verarbeitung bestimmt ist, als Kennung die Portadresse (IDY) des End-Ports, an dem das Segment (300, 305, 310, 315, 320) mit weiteren Netzwerkteilnehmern (800) angeschlossen ist, zuzuweisen, und
wobei der Netzwerkverteiler (120, 130, 140) ausgebildet ist, wenn der Netzwerkverteiler (120, 130, 140) ein Telegramm mit einer Portadresse (IDY) eines End-Ports des Netzwerkverteilers (120, 130, 140) als Kennung empfängt, das Telegramm direkt über den Ein-/Ausgangs-Port (PX) des Netzwerkverteilers (120, 130, 140) auszugeben, der dem End-Port der Portadresse (IDY) entspricht,
wobei die Portadressen (IDY) der End-Ports des Netzwerkverteilers (120, 130, 140) als fortlaufende Reihe ausgebildet sind,
wobei der Netzwerkverteiler (120, 130, 140) ausgebildet ist, auf der Grundlage von Operatoren aus einer Menge der fortlaufenden Reihe eine Teilmenge der fortlaufenden Reihe für das Routing der Telegramme mit Portadressen als Kennungen zu selektieren, und
wobei die Operatoren als Vergleichsoperatoren und/oder als logische Operatoren ausgebildet sind.

8. Automatisierungsnetzwerk (100) nach Anspruch 7,
wobei der Netzwerkverteiler (120, 130, 140) ausgelegt ist, Ein-/Ausgangs-Ports (PX) zu umfassen, die als Weiterleitungs-Ports ausgezeichnet sind,
wobei an die Weiterleitungs-Ports zusätzlich zu Netzwerkteilnehmern (800) weitere Netzwerkverteiler (120, 130, 140) über das Datenleitungsnetz (200) angeschlossen sind, wobei der Netzwerkverteiler (120, 130, 140) ausgebildet ist, wenn der Netzwerkverteiler (120, 130, 140) ein Telegramm mit einer Kennung empfängt, die nicht einer Portadresse (IDY) eines End-Ports des Netzwerkverteilers (120, 130, 140) entspricht, das Telegramm über einen in einer Routingtabelle hinterlegten Weiterleitungs-Port des Netzwerkverteilers (120, 130, 140) zu routen.

9. Automatisierungsnetzwerk (100) nach Anspruch 8,
wobei der Weiterleitungs-Port gleichzeitig als End-Port ausgebildet ist,
wobei der Masterteilnehmer (105, 110) ausgelegt ist, Telegramme, die für eine Verarbeitung durch die Netzwerkteilnehmer (800) gesperrt sind und dazu jeweils einen ersten Wert eines Datenelements eines ersten Datenfelds (585) im Telegramm aufweisen, über das Datenleitungsnetz (200) zu versenden, und
wobei der Netzwerkverteiler (120, 130, 140) ausgebildet ist, wenn der Netzwerkverteiler (120, 130, 140) ein Telegramm mit einer Portadresse (IDY) als Kennung vom Masterteilnehmer (105, 110) empfängt, das für einen End-Port des Netzwerkverteilers (120, 130, 140) bestimmt ist und für die Verarbeitung durch die Netzwerkteilnehmer (800) gesperrt ist, das Telegramm mit der Portadresse (IDY) als Kennung zu entsperren und über den entsprechenden Ein-/Ausgangs-Port(PX), der dem End-Port der Portadresse (IDY) zugeordnet ist, an das Segment (300, 305, 310, 315, 320) mit weiteren Netzwerkteilnehmern (800) zur Verarbeitung auszugeben,
wobei zur Entsperrung des Telegramms mit der Portadresse (IDY) als Kennung, der erste Wert des Datenelements mit einem zweiten Wert des Datenelements durch den Netzwerkverteiler (120, 130, 140) überschrieben wird,
wobei der zweite Wert des Datenelements des ersten Datenfelds (585) im Telegramm eine Freigabe der Verarbeitung des Telegramms für die Netzwerkteilnehmer (800) anzeigt.

10. Automatisierungsnetzwerk (100) nach einem der Ansprüche 7 bis 9,
wobei der Masterteilnehmer (105, 110) ausgelegt ist, zur Erfassung der Ein-/Ausgangs-Ports (PX) des Netzwerkverteilers (120, 130, 140) Abfragetelegramme über das Datenleitungsnetz (200) zu versenden, und
wobei der Masterteilnehmer (105, 110) ausgebildet ist, nach dem Erhalt eines Abfragetelegramms von dem Netzwerkverteiler (120, 130, 140) mit einer Port-Information über die Ein-/Ausgangs-Ports (PX) des Netzwerkverteilers (120, 130, 140), an die jeweils Segmente (300, 305, 310, 315, 320) mit weiteren Netzwerkteilnehmern (800) angeschlossen sind und als End-Ports ausgebildet sind, die Portadresse (IDY) zuzuordnen.

11. Automatisierungsnetzwerk (100) nach einem der Ansprüche 7 bis 10,
wobei das Automatisierungsnetzwerk (100) als EtherCAT Netzwerk ausgelegt ist die Telegramme als EtherCAT Telegramme ausgebildet sind.

12. Netzwerkverteiler (120, 130, 140) für ein Automatisierungsnetzwerk (100) nach einem der Ansprüche 7 bis 11, wobei der Netzwerkverteiler (120, 130, 140) ausgelegt ist, ein Verfahren zum Routen von Telegrammen nach einem der Ansprüche 1 bis 4 in dem Automatisierungsnetzwerk (100) auszuführen.

## Claims

1. Method for routing telegrams in an automation network (100), the automation network (100) comprising network subscribers (800) connected to one another via a data line network (200),
wherein at least one network subscriber (800) is in the form of a master subscriber (105, 110) and sends telegrams to the network subscribers (800) via the data line network (200),
wherein at least one network subscriber (800) is in the form of a network distributor (120, 130, 140) having multiple input/output ports (PX), the input/output ports (PX), to each of which are connected segments (300, 305, 310, 315, 320) containing further network subscribers (800), being marked as terminal ports, segments (300, 305, 310, 315, 320) containing further network subscribers (800) being connected to the terminal ports of the network distributor (120, 130, 140) via the data line network (200),
**characterized in that** the master subscriber (105) allocates a port address (IDY) to each of the terminal ports,
wherein the master subscriber (105) allocates, as an identifier, the port address (IDY) of the terminal port to which the segment (300, 305, 310, 315, 320) containing further network subscribers (800) is connected to a telegram that is intended for a segment (300, 305, 310, 315, 320) containing further network subscribers (800) for processing, and
wherein, if the network distributor (120, 130, 140) receives a telegram containing a port address (IDY) of a terminal port of the network distributor (120, 130, 140) as an identifier, the network distributor (120, 130, 140) outputs the telegram directly via the input/output port (PX) of the network distributor (120, 130, 140) that corresponds to the terminal port of the port address (IDY),
wherein the port addresses (IDY) of the terminal ports of the network distributor (120, 130, 140) are in the form of a continuous series,
wherein the network distributor (120, 130, 140) is able to take operators from a set of the continuous series as a basis for selecting a subset of the continuous series for routing the telegrams containing port addresses as identifiers, and
wherein the operators are in the form of comparison operators and/or in the form of logic operators.

2. Method according to Claim 1,
wherein the network distributor (120, 130, 140) comprises input/output ports (PX) that are marked as forwarding ports,
wherein, in addition to network subscribers (800), further network distributors (120, 130, 140) are connected to the forwarding ports via the data line network (200),
wherein, if the network distributor (120, 130, 140) receives a telegram containing an identifier that does not correspond to a port address (IDY) of a terminal port of the network distributor (120, 130, 140), the network distributor (120, 130, 140) routes the telegram via a forwarding port of the network distributor (120, 130, 140) that is stored in a routing table.

3. Method according to Claim 2,
wherein the forwarding port is simultaneously marked as a terminal port,
wherein the master subscriber (105, 110) is designed to send telegrams that are locked for processing by the network subscribers (800), and, to this end, each have a first value of a data element of a first data field (585) in the telegram, via the data line network (200),
and
wherein, if the network distributor (120, 130, 140) receives from the master subscriber (105, 110) a telegram, containing a port address (IDY) as an identifier, that is intended for a terminal port of the network distributor (120, 130, 140) and is locked for processing by the network subscribers (800), the network distributor (120, 130, 140) unlocks the telegram containing the port address (IDY) as an identifier and uses the applicable input/output port (PX) associated with the terminal port of the port address (IDY) to output said telegram to the segment (300, 305, 310, 315, 320) containing further network subscribers (800) for processing,
wherein the telegram containing the port address (IDY) as an identifier is unlocked by virtue of the first value of the data element being overwritten with a second value of the data element by the network distributor (120, 130, 140),
wherein the second value of the data element of the first data field (585) in the telegram indicates clearance for processing the telegram for the network subscribers (800) .

4. Method according to one of Claims 1 to 3,
wherein the master subscriber (105, 110) detects the input/output ports (PX) of the network distributor (120, 130, 140) by sending query telegrams via the data line network (200), and
wherein the master subscriber (105, 110) allocates the port address (IDY) after receiving a query telegram from the network distributor (120, 130, 140) containing port information about the input/output ports (PX) of the network distributor (120, 130, 140), to each of which are connected segments (300, 305, 310, 315, 320) containing further network subscribers (800) and which are in the form of terminal ports.

5. Data structure (500) for use in a method according to one of Claims 1 to 4,
wherein the data structure (500) is in the form of a telegram, and the telegram has a header section (505), a data section (510) and an end section (515),
wherein the header section (505) comprises the port address (IDY) as an identifier,
wherein the data section (510) has a first data field (585) containing a data element having a first or second value, and
wherein the end section (515) comprises a checksum field (550) for an integrity check on data that are sent, **characterized in that** the data element has the first value if the telegram is locked for processing by the network subscribers (800), and the data element has the second value if the telegram is unlocked for processing by the network subscribers (800).

6. Data structure (500) according to Claim 5,
wherein the telegram is in the form of an EtherCAT telegram, the header section (505) of the EtherCAT telegram comprising a TAG field (565) that has a second data field (595), a third data field (600), a fourth data field (605) and a fifth data field (610),
wherein the second data field (595) of the TAG field (565) comprises a TAG protocol identification for identifying the TAG field (565) in the header section (505) of the EtherCAT telegram,
wherein the third and fourth data fields (600, 605) of the TAG field (565) comprise the port address (IDY) of the EtherCAT telegram, which port address is in the form of an identifier and has a destination identifier and a sender identifier,
wherein the fifth data field (610) comprises fragmentation information, provided that the telegram is fragmented,
wherein the data section (510) comprises a further header section (525), which has a length field (575), a reserve field (580) and the first data field (585),
wherein the first data field (585) is in the form of a type field and the data element is in the form of an EtherCAT protocol type, and
wherein, if the EtherCAT telegram is locked for processing by the network subscribers (800), the EtherCAT protocol type has the first value,
wherein, if the EtherCAT telegram is unlocked for processing by the network subscribers (800), the EtherCAT protocol type comprises the second value.

7. Automation network (100) comprising network subscribers (800) connected to one another via a data line network (200),
wherein at least one network subscriber (800) is in the form of a master subscriber (105, 110) designed to send telegrams to the network subscribers (800) via the data line network (200),
wherein at least one network subscriber (800) is in the form of a network distributor (120, 130, 140) having multiple input/output ports (PX), the input/output ports (PX), to each of which are connected segments (300, 305, 310, 315, 320) containing further network subscribers (800), being marked as terminal ports, segments (300, 305, 310, 315, 320) containing further network subscribers (800) being connected to the terminal ports of the network distributor (120, 130, 140) via the data line network (200),
**characterized in that** the master subscriber (105) is designed to allocate a port address (IDY) to each of the terminal ports,
wherein the master subscriber (105) is designed to allocate, as an identifier, the port address (IDY) of the terminal port to which the segment (300, 305, 310, 315, 320) containing further network subscribers (800) is connected to a telegram that is intended for a segment (300, 305, 310, 315, 320) containing further network subscribers (800) for processing, and
wherein the network distributor (120, 130, 140) is designed so as, if the network distributor (120, 130, 140) receives a telegram containing a port address (IDY) of a terminal port of the network distributor (120, 130, 140) as an identifier, to output the telegram directly via the input/output port (PX) of the network distributor (120, 130, 140) that corresponds to the terminal port of the port address (IDY),
wherein the port addresses (IDY) of the terminal ports of the network distributor (120, 130, 140) are in the form of a continuous series,
wherein the network distributor (120, 130, 140) is designed to take operators from a set of the continuous series as a basis for selecting a subset of the continuous series for routing the telegrams containing port addresses as identifiers, and
wherein the operators are in the form of comparison operators and/or in the form of logic operators.

8. Automation network (100) according to Claim 7,
wherein the network distributor (120, 130, 140) is designed to comprise input/output ports (PX) that are marked as forwarding ports,
wherein, in addition to network subscribers (800), further network distributors (120, 130, 140) are connected to the forwarding ports via the data line network (200),
wherein the network distributor (120, 130, 140) is designed so as, if the network distributor (120, 130, 140) receives a telegram containing an identifier that does not correspond to a port address (IDY) of a terminal port of the network distributor (120, 130, 140), to route the telegram via a forwarding port of the network distributor (120, 130, 140) that is stored in a routing table.

9. Automation network (100) according to Claim 8, wherein the forwarding port is simultaneously in the form of a terminal port,
wherein the master subscriber (105, 110) is designed to send telegrams that are locked for processing by the network subscribers (800), and, to this end, each have a first value of a data element of a first data field (585) in the telegram, via the data line network (200), and
wherein the network distributor (120, 130, 140) is designed so as, if the network distributor (120, 130, 140) receives from the master subscriber (105, 110) a telegram, containing a port address (IDY) as an identifier, that is intended for a terminal port of the network distributor (120, 130, 140) and is locked for processing by the network subscribers (800), to unlock the telegram containing the port address (IDY) as an identifier and to use the applicable input/output port (PX) associated with the terminal port of the port address (IDY) to output said telegram to the segment (300, 305, 310, 315, 320) containing further network subscribers (800) for processing,
wherein the telegram containing the port address (IDY) as an identifier is unlocked by virtue of the first value of the data element being overwritten with a second value of the data element by the network distributor (120, 130, 140),
wherein the second value of the data element of the first data field (585) in the telegram indicates clearance for processing the telegram for the network subscribers (800) .

10. Automation network (100) according to one of Claims 7 to 9,
wherein the master subscriber (105, 110) is designed to detect the input/output ports (PX) of the network distributor (120, 130, 140) by sending query telegrams via the data line network (200), and
wherein the master subscriber (105, 110) is designed to allocate the port address (IDY) after receiving a query telegram from the network distributor (120, 130, 140) containing port information about the input/output ports (PX) of the network distributor (120, 130, 140), to each of which are connected segments (300, 305, 310, 315, 320) containing further network subscribers (800) and which are in the form of terminal ports.

11. Automation network (100) according to one of Claims 7 to 10,
wherein the automation network (100) is designed as an EtherCAT network and the telegrams are in the form of EtherCAT telegrams.

12. Network distributor (120, 130, 140) for an automation network (100) according to one of Claims 7 to 11, wherein the network distributor (120, 130, 140) is designed to perform a method for routing telegrams according to one of Claims 1 to 4 in the automation network (100).

## Revendications

1. Procédé d'acheminement de télégrammes dans un réseau d'automatisation (100), le réseau d'automatisation (100) comprenant des périphériques de réseau (800) qui sont reliés entre eux par le biais d'un réseau de lignes de données (200),
au moins un périphérique de réseau (800) étant conçu comme un périphérique maître (105, 110) et envoyant des télégrammes aux périphériques de réseau (800) par le biais du réseau de lignes de données (200),
au moins un périphérique de réseau (800) étant conçu comme un répartiteur de réseau (120, 130, 140) qui comporte plusieurs ports d'entrée/sortie (PX), les ports d'entrée/sortie (PX) auxquels les segments (300, 305, 310, 315, 320) sont raccordés à d'autres périphériques de réseau (800) étant identifiés comme ports d'extrémité, des segments (300, 305, 310, 315, 320) pourvus d'autres périphériques de réseau (800) étant raccordés par le biais du réseau de lignes de données (200) à des ports d'extrémité du répartiteur de réseau (120, 130, 140), **caractérisé en ce que** le périphérique maître (105) attribue une adresse de port (IDY) à chacun des ports d'extrémité,
le périphérique maître (105) envoyant un télégramme, qui est destiné à un segment (300, 305, 310, 315, 320) pourvu d'autres périphériques de réseau (800) pour le traitement, associant comme identifiant l'adresse de port (IDY) du port d'extrémité, auquel est raccordé le segment (300, 305, 310, 315, 320) pourvu d'autres périphériques de réseau (800), et
lorsque le répartiteur de réseau (120, 130, 140) reçoit un télégramme pourvu d'une adresse de port (IDY) d'un port d'extrémité du répartiteur de réseau (120, 130, 140) comme identifiant, le répartiteur de réseau (120, 130, 140) délivrant le télégramme directement par le biais du port d'entrée/sortie (PX) du répartiteur de réseau (120, 130, 140) qui correspond au port d'extrémité de l'adresse de port (IDY),
les adresses de port (IDY) des ports d'extrémité du répartiteur de réseau (120, 130, 140) étant conçues comme une série continue,
le répartiteur de réseau (120, 130, 140) pouvant sélectionner un sous-ensemble de la série continue pour l'acheminement des télégrammes pourvu d'adresses de port comme identifiants dans un ensemble de la série continue sur la base d'opérateurs, et
les opérateurs étant conçus sous la forme d'opérateurs de comparaison et/ou d'opérateurs logiques.

2. Procédé selon la revendication 1,
le répartiteur de réseau (120, 130, 140) comprenant des ports d'entrée/sortie (PX) qui sont désignés comme ports de transmission,
d'autres répartiteurs de réseau (120, 130, 140) étant raccordés, en plus des périphériques de réseau (800), par le biais du réseau de lignes de données (200) aux ports de transmission,
lorsque le répartiteur de réseau (120, 130, 140) reçoit un télégramme pourvu d'un identifiant qui ne correspond pas à une adresse de port (IDY) d'un port d'extrémité du répartiteur de réseau (120, 130, 140), le répartiteur de réseau (120, 130, 140) acheminant le télégramme par le biais d'un port de transmission du répartiteur de réseau (120, 130, 140) qui est enregistré dans une table d'acheminement.

3. Procédé selon la revendication 2,
le port de transmission étant conçu en même temps comme port d'extrémité,
le périphérique maître (105, 110) étant conçu pour envoyer, par le biais du réseau de lignes de données (200), des télégrammes qui sont bloqués pour un traitement par les périphériques de réseau (800) et qui ont chacun une première valeur d'un élément de données d'un premier champ de données (585) dans le télégramme, et
lorsque le répartiteur de réseau (120, 130, 140) reçoit du périphérique maître (105, 110) un télégramme, pourvu d'une adresse de port (IDY) comme identifiant, qui est destiné à un port d'extrémité du répartiteur de réseau (120, 130 , 140) et qui est bloqué pour le traitement par les périphériques de réseau (800), le répartiteur de réseau (120, 130, 140) débloquant le télégramme pourvu de l'adresse de port (IDY) comme identifiant et le délivrant pour le traitement au segment (300, 305, 310, 315, 320) pourvu d'autres périphériques de réseau (800) par le biais du port d'entrée/sortie correspondant (PX) qui est associé au port d'extrémité du port d'adresse (IDY),
pour déverrouiller le télégramme pourvu de l'adresse de port (IDY) comme identifiant, la première valeur de l'élément de données étant écrasée avec une deuxième valeur de l'élément de données par le répartiteur de réseau (120, 130, 140),
la deuxième valeur de l'élément de données du premier champ de données (585) dans le télégramme indiquant que les périphériques de réseau (800) sont autorisés à traiter le télégramme.

4. Procédé selon l'une des revendications 1 à 3,
le périphérique maître (105, 110) envoyant des télégrammes de requête par le biais du réseau de lignes de données (200) afin de détecter les ports d'entrée/sortie (PX) du répartiteur de réseau (120, 130, 140), et
après avoir reçu du répartiteur de réseau (120, 130, 140) un télégramme de requête pourvu d'une information de port concernant les ports d'entrée/sortie (PX) du répartiteur de réseau (120, 130, 140), le périphérique maître (105, 110) étant raccordé aux segments respectifs (300, 305, 310, 315, 320) pourvus d'autres périphériques de réseau (800) et étant conçu comme port d'extrémité qui associe l'adresse de port (IDY).

5. Structure de données (500) destinée à être utilisée dans un procédé selon l'une des revendications 1 à 4,
la structure de données (500) étant conçue sous la forme d'un télégramme, et le télégramme comportant une portion de tête (505), une portion de données (510) et une portion de fin (515),
la portion de tête (505) comprenant l'adresse de port (IDY) comme identifiant,
la portion de données (510) comportant un premier champ de données (585) pourvu d'un élément de données ayant une première ou une deuxième valeur, et
la portion de fin (515) comprenant un champ de somme de contrôle (550) destiné à effectuer un contrôle d'intégrité de données envoyées,
**caractérisée en ce que** l'élément de données a la première valeur si le télégramme est bloqué pour le traitement par les périphériques de réseau (800) et l'élément de données a la deuxième valeur si le télégramme est débloqué pour le traitement par les périphériques de réseau (800).

6. Structure de données (500) selon la revendication 5,
le télégramme étant conçu sous la forme d'un télégramme EtherCAT, le télégramme EtherCAT comprenant dans la portion de tête (505) un champ TAG (565) qui comporte un deuxième champ de données (595), un troisième champ de données (600), un quatrième champ de données (605) et un cinquième champ de données (610),
le deuxième champ de données (595) du champ TAG (565) comprenant une identification de protocole TAG pour identifier le champ TAG (565) dans la portion de tête (505) du télégramme EtherCAT,
les troisième et quatrième champs de données (600, 605) du champ TAG (565) comprenant l'adresse de port (IDY), conçue comme un identifiant, du télégramme EtherCAT qui comporte un identifiant de destinataire et un identifiant d'expéditeur,
le cinquième champ de données (610) comprenant une information de fragmentation si le télégramme est fragmenté,
la portion de données (510) comprenant une autre portion de tête (525) qui comporte un champ de longueur (575), un champ de réserve (580) et le premier champ de données (585),
le premier champ de données (585) étant conçu sous la forme d'un champ de type et l'élément de données étant conçu sous la forme d'un type de protocole EtherCAT, et lorsque le télégramme EtherCAT est bloqué pour le traitement par les périphériques de réseau (800), le type de protocole EtherCAT comprenant la première valeur,
lorsque le télégramme EtherCAT est débloqué pour le traitement par les périphériques de réseau (800), le type de protocole EtherCAT comprenant la deuxième valeur.

7. Réseau d'automatisation (100) qui comprend des périphériques de réseau (800) qui sont reliés entre eux par le biais d'un réseau de lignes de données (200),
au moins un périphérique de réseau (800) étant conçu comme un périphérique maître (105, 110) qui est conçu pour envoyer des télégrammes aux périphériques de réseau (800) par le biais du réseau de lignes de données (200), au moins un périphérique de réseau (800) étant conçu comme un répartiteur de réseau (120, 130, 140) qui comporte plusieurs ports d'entrée/sortie (PX), les ports d'entrée/sortie (PX), auxquels sont raccordés les segments (300, 305, 310, 315, 320) pourvus des autres périphériques de réseau (800), étant désignés comme ports d'extrémité,
des segments (300, 305, 310, 315, 320) pourvus d'autres périphériques de réseau (800) étant raccordés par le biais du réseau de lignes de données (200) aux ports d'extrémité du répartiteur de réseau (120, 130, 140), **caractérisé en ce que** le périphérique maître (105) est conçu pour attribuer une adresse de port (IDY) à chacun des ports d'extrémité,
le périphérique maître (105) étant conçu pour attribuer à un télégramme, qui est destiné pour le traitement à un segment (300, 305, 310, 315, 320) pourvu d'autres périphériques de réseau (800), comme identifiant l'adresse de port (IDY) du port d'extrémité auquel est raccordé le segment (300, 305, 310, 315, 320) pourvu d'autres périphériques de réseau (800), et
le répartiteur de réseau (120, 130, 140) étant conçu pour délivrer, lorsque le répartiteur de réseau (120, 130, 140) reçoit un télégramme pourvu d'une adresse de port (IDY) d'un port d'extrémité du répartiteur de réseau (120, 130, 140) comme un identifiant, le télégramme directement par le biais du port d'entrée/sortie (PX) du répartiteur de réseau (120, 130, 140) qui correspond au port d'extrémité de l'adresse de port (IDY),
les adresses de port (IDY) des ports d'extrémité du répartiteur de réseau (120, 130, 140) étant conçues comme une série continue,
le répartiteur de réseau (120, 130, 140) étant conçu pour sélectionner un sous-ensemble de la série continue pour l'acheminement des télégrammes pourvus d'adresses de port comme identifiants dans un ensemble de la série continue sur la base d'opérateurs, et
les opérateurs étant conçus sous la forme d'opérateurs de comparaison et/ou d'opérateurs logiques.

8. Réseau d'automatisation (100) selon la revendication 7,
le répartiteur de réseau (120, 130, 140) étant conçu pour comprendre des ports d'entrée/sortie (PX) qui sont désignés comme ports de transmission,
d'autres répartiteurs de réseau (120, 130, 140) étant raccordés, en plus des périphériques de réseau (800), aux ports de transmission par le biais du réseau de lignes de données (200),
lorsque le répartiteur de réseau (120, 130, 140) reçoit un télégramme pourvu d'un identifiant qui ne correspond pas à une adresse de port (IDY) d'un port d'extrémité du répartiteur de réseau (120, 130, 140), le répartiteur de réseau (120, 130, 140) étant conçu pour acheminer le télégramme par le biais d'un port de transmission du répartiteur de réseau (120, 130, 140) qui est enregistré dans une table d'acheminement.

9. Réseau d'automatisation (100) selon la revendication 8,
le port de transmission étant conçu en même temps comme port d'extrémité,
le périphérique maître (105, 110) étant conçu pour envoyer, par le biais du réseau de lignes de données (200), des télégrammes qui sont bloqués pour un traitement par les périphériques de réseau (800) et qui ont chacun une première valeur d'un élément de données d'un premier champ de données (585) dans le télégramme, et
lorsque le répartiteur de réseau (120, 130, 140) reçoit du périphérique maître (105, 110) un télégramme, pourvu d'une adresse de port (IDY) comme identifiant, qui est destiné à un port d'extrémité du répartiteur de réseau (120, 130 , 140) et qui est bloqué pour le traitement par les périphériques de réseau (800), le répartiteur de réseau (120, 130, 140) étant conçu pour débloquer le télégramme pourvu de l'adresse de port (IDY) comme identifiant et le délivrer pour le traitement au segment (300, 305, 310, 315, 320) pourvu d'autres périphériques de réseau (800) par le biais du port d'entrée/sortie correspondant (PX) qui est associé au port d'extrémité du port d'adresse (IDY),
pour déverrouiller le télégramme pourvu de l'adresse de port (IDY) comme identifiant, la première valeur de l'élément de données étant écrasée avec une deuxième valeur de l'élément de données par le répartiteur de réseau (120, 130, 140),
la deuxième valeur de l'élément de données du premier champ de données (585) dans le télégramme indiquant que les périphériques de réseau (800) sont autorisés à traiter le télégramme.

10. Réseau d'automatisation (100) selon l'une des revendications 7 à 9,
le périphérique maître (105, 110) étant conçu pour envoyer des télégrammes de requête par le biais du réseau de lignes de données (200) afin de détecter les ports d'entrée/sortie (PX) du répartiteur de réseau (120, 130, 140), et
après avoir reçu du répartiteur de réseau (120, 130, 140) un télégramme de requête pourvu d'une information de port concernant les ports d'entrée/sortie (PX) du répartiteur de réseau (120, 130, 140), le périphérique maître (105, 110) étant conçu pour être raccordé aux segments respectifs (300, 305, 310, 315, 320) pourvus d'autres périphériques de réseau (800) et étant conçu comme port d'extrémité qui associe l'adresse de port (IDY).

11. Réseau d'automatisation (100) selon l'une des revendications 7 à 10,
le réseau d'automatisation (100) étant conçu comme un réseau EtherCAT, les télégrammes étant conçus sous la forme de télégrammes EtherCAT.

12. Répartiteur de réseau (120, 130, 140) destiné à un réseau d'automatisation (100) selon l'une des revendications 7 à 11, le répartiteur de réseau (120, 130, 140) étant conçu pour mettre en œuvre un procédé d'acheminement de télégrammes selon l'une des revendications 1 à 4 dans le réseau d'automatisation (100) .
